(19) Europäisches Patentamt
European Patent Office
Office européen des brevets

(11) EP 3 327 488 B1

(12) EUROPEAN PATENT SPECIFICATION

(45) Date of publication and mention of the grant of the patent:
**06.01.2021 Bulletin 2021/01**

(51) Int Cl.:
*G02C 7/02* (2006.01) *C09D 5/00* (2006.01)

(21) Application number: **16306549.3**

(22) Date of filing: **23.11.2016**

# (54) OPTICAL ARTICLE COMPRISING A DYE RESISTANT TO PHOTO-DEGRADATION

OPTISCHER ARTIKEL MIT EINEM GEGEN PHOTODEGRADATION RESISTENTEN FARBSTOFF

ARTICLE D'OPTIQUE COMPORTANT UN COLORANT RÉSISTANT À LA PHOTODÉGRADATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.05.2018 Bulletin 2018/22**

(73) Proprietor: **Essilor International**
**94220 Charenton-le-Pont (FR)**

(72) Inventors:
- **ZHENG, Haipeng**
  **Dallas, Texas 75235 (US)**
- **KASTURE, Prakhar**
  **39346 SINGAPORE (SG)**

(74) Representative: **Jacobacci Coralis Harle**
**32, rue de l'Arcade**
**75008 Paris (FR)**

(56) References cited:
**EP-A1- 0 749 120**
**EP-A2- 1 494 891**
**WO-A1-2010/111499**
**US-A1- 2016 168 402**

- **Tomasz ; Stanczyk ET AL: "Eyeglasses for brightening the field of vision for motor vehicle drivers" In: "DATABASE CAPLUS, Assession No. 1991:44453; PATENT No. PL134815", 9 February 1991 (1991-02-09), CAS, XP055397615, * the whole document * & PL 134 815 B1 (OS BAD ROZWOJOWY PRZEM BARWNI [PL]) 30 September 1985 (1985-09-30)**
- **Yoshiaki Kubodera ET AL: "Method for dyeing plastic lenses useful for eyeglass lenses and contact lenses" In: "DATABASE CAPLUS", 6 February 2004 (2004-02-06), CAS, XP055397667, * abstract * & JP 2004 036032 A (HOYA CORP) 5 February 2004 (2004-02-05)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 327 488 B1

## Description

The present invention relates to an optical article, in particular an ophthalmic lens, containing a specific photo-resistant absorbing dye incorporated into the substrate or into a coating deposited at the surface of the substrate, which blocks transmission of light in at least one selected wavelength range, and more particularly wavelengths having an impact on the health.

In the optics field, it is usual to coat articles with coatings so as to impart the articles various mechanical and/or optical properties. Thus, classically, coatings such as impact-resistant, anti-abrasion/scratch-resistant and/or antireflection coatings are successively formed onto an ophthalmic lens.

It may be desirable to impart a color, or a filtering function to the optical article so as to prevent or limit transmission of harmful light to the retina, but this should be done without modifying its properties such as abrasion resistance, transparency or adhesion of the coatings.

Indeed, visible light as perceived by humans approximately extends over a spectrum ranging from a 380 nm wavelength to a 780 nm wavelength. The part of this spectrum ranging from around 400 nm to around 500 nm does correspond to high-energy wavelengths, essentially blue light.

Many studies (see for example Kitchel E., "The effects of blue light on ocular health", Journal of Visual Impairment and Blindness Vol. 94, No. 6, 2000 or Glazer-Hockstein and al., Retina, Vol. 26, No. 1. pp. 1-4, 2006) suggest that part of the blue light has phototoxic effects on human eye health, and especially on the retina. Ocular photobiology studies demonstrated that an excessively prolonged or intense exposure to blue light may induce severe ophthalmic diseases such as age-related macular degeneration (ARMD) or cataract. Thus, it is recommended to limit the exposure to blue light potentially harmful, in particular as regards the wavelength band with an increased dangerousness (420-450 nm).

It is furthermore necessary to eliminate as much as possible the harmful influence of ultraviolet light (UV light) on the eye of a user. Ultraviolet (UV) light is the portion of the luminous spectrum ranging from 100 to 380 nm. Amongst the UV bands reaching the earth surface, the UVA band, ranging from 315 nm to 380 nm, and the UVB band, ranging from 280 nm to 315 nm, are particularly harmful to the retina.

Further, it is recommended to limit exposure of the eyes to harmful near infrared light (NIR), which covers the wavelength range from 780 to 1400 nm. Acute NIR exposure is well known to lead to cataract, and recent investigations showed strong presumption that cataract can also be triggered upon chronic NIR exposure.

It has already been suggested to cut at least partially UV light, NIR light and/or the troublesome part of the blue light spectrum from 400 nm to 460 nm, for example in the patent application WO 2008/024414, by means of lenses comprising a film partially inhibiting the light in the suitable wavelength range, through absorption or through reflection. This can be done by incorporating a yellow dye into the optical element.

WO 2008/014925 discloses a process for dyeing spectacle glasses comprising the steps of providing a spectacle glass, applying an ink composition to at least one surface of the spectacle glass by means of a printing head and fixing the ink composition. Various dyes absorbing radiations in the UV, IR and/or visible range can be incorporating in such a manner.

US 2003/182737 provides a method of dyeing a thermoplastic resin plastic lens in any desired color tone and density as well as a colored plastic lens made by the method. The method involves dipping a thermoplastic resin plastic lens in a dyeing liquid containing one or more disperse dyes and one or more monocyclic monoterpenes.

US 6135595 discloses the immersion of plastic lenses, optionally coated with a hard coat film, in an organic solvent containing an oil-soluble dye, or in hot water in which a disperse dye is dispersed.

The patent application PL 134815 discloses an eyeglass lens provided with a yellow plastic filter containing an azo dye. US 2016/168402 discloses a water dispersible phase change ink composition for printing on ophthalmic lenses. The composition comprises a hydrophilic wax, a low viscosity wax and a colorant, such as an azo dye. EP 0749120 describes an optical recording medium usable for lasers of various wavelengths, comprising a recording layer, a reflective layer and a protective layer provided on a substrate, wherein the recording layer contains a quinophthalone compound. EP 1494891 discloses polycarbonate resin compositions containing LUMOGEN® dyes, which are used for the molding of outer lenses for automotive headlamps. JP 2004-036032 discloses a method for dyeing a lens, comprising the steps of immersing the lens in a dye solution followed by pulling up the lens to form dye coating film on the surface thereof and of heating the resultant lens to diffuse the dye into the lens. WO 2010/111499 discloses ophthalmic systems comprising both a photochromic component, a blue light blocking component that selectively filter specific blue light wavelengths, and optionally a UV filter.

Incorporating in a coating an optical filtering dye able to cut specific ranges of wavelengths can prove difficult, as it is necessary to adapt the formulation of the optical coating composition. It is especially difficult to get a transparent coating without haze, due to poor solubility of dyes, and the adaptation of the formulation in order to solubilize the dyes might modify the properties of the coating.

Another problem is that most of absorbing dyes used for making optical articles with optical filtering capability, and in particular yellow dyes from families such as perylene, coumarin, porphyrin and acridine, show photo-stability

issues when exposed to the UV rays and/or sunlight. The patents and patent applications cited above are not concerned with the photo-degradation or photo-stability of dyes.

Several references such as J. C. V. P. Moura, A. M. F. Oliveira-Campos, J. Griffiths, Dyes and Pigments, 33(3), 1997, 173-196 are related to the effect of additives on the photo-stability of dyes in polymers. The article Y. Yang, G. Qian, D. Su, M. Wang, Optics Communications, 239 (4-6), 2004, 415-420 suggests the use of photo-stable additives including 1,4-diazobicyclo[2,2,2]octane (DABCO), 2,2,6,6-tetramethylpiperidine (TMP) and coumarin 440 in order to improve the photo-stability of the dye pyrromethene 567 in silicate coatings. WO 2008/146087 discloses inks and coatings for the production of oxygen sensitive elements with improved photostability, using selected photostabilizers.

However, using this traditional stabilization approach by antioxidants, UV absorbers etc. can be very detrimental to the final coating performances when a significant amount of those additives is employed, which may lead to a decrease of coating hardness, rigidity, optical clarity, etc. In addition, some UV absorbers may interact with the matrix or dye molecule during a curing process, leading to changes in the absorption wavelength range of the dye, or cause solubility or coating haze issues.

In view of the foregoing, there is a need for an optical article with a filtering function, capable of at least partially blocking transmission of light in the visible wavelength range, preferably in the blue wavelength range, or another wavelength range of the light spectrum, having an improved resistance to photo-degradation. The modified filter should be optically clear (i.e., deliver low haze), should not modify the initial functional properties of other coatings existing on surface of the optical article, and the filtering function should be durable in time in real life conditions. It is also desirable that the optical article selectively blocks a relatively narrow range of the spectrum.

The process for manufacturing such an article should be simple, easy to implement, reproducible and should not degrade the performance of the filter.

The inventors discovered that improved photo-stability in host matrixes of a selective group of dyes having a selective optical filtering function could be achieved by using specific substituents on the chromophore. The specific absorption dyes that have been identified are compatible with the matrixes in which they are incorporated (coating or substrate), stable during the manufacturing process of the optical articles, and the management of filtration level in accordance with the needs is easy.

To address the needs of the present invention and to remedy to the mentioned drawbacks of the prior art, the applicant provides an optical article comprising at least one main surface onto which an epoxy coating is deposited, wherein the epoxy coating includes at least one absorbing dye comprising any one of the following groups of formulae:

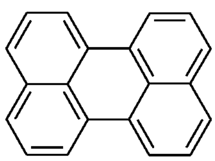 (I)

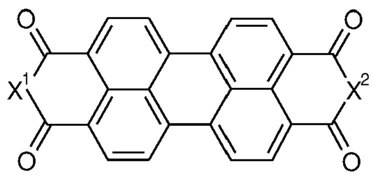 (Ia)

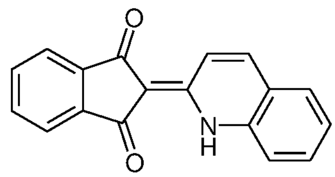 (II)

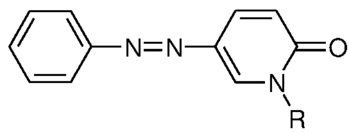 (III)

wherein R represents an aryl or alkyl group, $X^1$ and $X^2$ independently represent O or a N-$R^1$ group with $R^1$ representing an alkyl or aryl group, and the groups of formulae (I), (II), (III) and optionally (Ia) have at least one carbon atom substituted with a group chosen from -OH, - CN, bromo, -$NO_2$, alkoxy, aryloxy, -COOH, -CHO, -COalkyl, -COaryl, haloalkyl, -SH, -S-alkyl, - S-aryl, -$SO_2$alkyl, -$OSO_2$alkyl, -$SO_2$aryl and -$OSO_2$aryl, or have at least two carbon atoms substituted with a chloro group, and wherein the dye of formula (III) does not comprise any $SO_3H$ group or a salt thereof, and the dye of formula (II) is not a compound having any one of the following formulae:

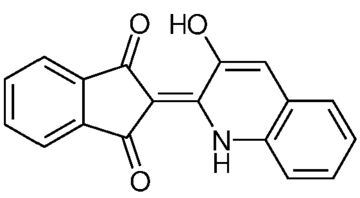 (IIa)

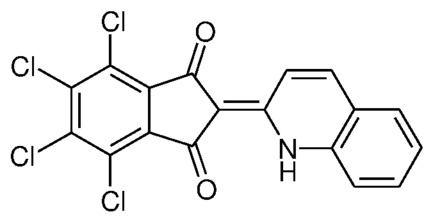 (IIb)

The invention also relates to an optical filtering epoxy coating for an optical article comprising at least one absorbing dye comprising any one of the following groups of formulae:

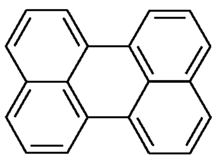 (I) 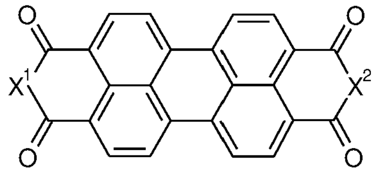 (Ia)

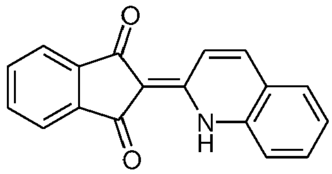 (II) 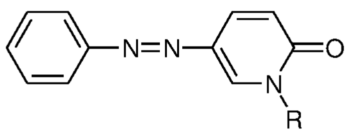 (III) 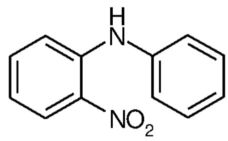 (IV)

wherein R, $X^1$ and $X^2$ are such as described above, and the groups of formulae (I), (II), (III), (IV) and optionally (Ia) have at least one carbon atom substituted with a group chosen from -OH, -CN, bromo, $-NO_2$, alkoxy, aryloxy, -COOH, -CHO, -COalkyl, -COaryl, haloalkyl, -SH, -S-alkyl, -S-aryl, $-SO_2$alkyl, $-OSO_2$alkyl, $-SO_2$aryl, $-OSO_2$aryl and sulfonamide, or have at least two carbon atoms substituted with a chloro group, and wherein the dye of formula (III) does not comprise any $SO_3H$ group or a salt thereof.

As used herein, when an article comprises one or more layer(s) or coating(s) on the surface thereof, "depositing a layer or a coating onto the article" means that a layer or a coating is deposited onto the uncovered (exposed) surface of the article external coating, that is to say the coating that is the most distant from the substrate.

As used herein, a coating that is "on" a substrate/coating or which has been deposited "onto" a substrate/coating is defined as a coating that (i) is positioned above the substrate/coating, (ii) is not necessarily in contact with the substrate/coating, that is to say one or more intermediate coating(s) may be interleaved between the substrate/coating and the relevant coating (however, it does preferably contact said substrate/coating), and (iii) does not necessarily completely cover the substrate/coating. When "a coating 1 is said to be located under a coating 2", it should be understood that coating 2 is more distant from the substrate than coating 1.

The optical article according to the invention is preferably a transparent optical article, in particular an optical lens or lens blank, more preferably an ophthalmic lens or lens blank.

The term "ophthalmic lens" is used to mean a lens adapted to a spectacle frame to protect the eye and/or correct the sight. Said lens can be chosen from afocal, unifocal, bifocal, trifocal and progressive lenses. The expression "ophthalmic lens" excludes intraocular lenses in contact with living tissues, such as contact lenses.

Although ophthalmic optics is a preferred field of the invention, it will be understood that this invention can be applied to optical elements of other types where filtering specified wavelengths may be beneficial, such as, for example, lenses for optical instruments, safety goggles, filters particularly for photography, astronomy or the automobile industry, optical sighting lenses, ocular visors, optics of lighting systems, screens, glazings, etc.

If the optical article is an optical lens, it may be coated on its front main surface, rear main side, or both sides with a coating containing the dye of the invention. As used herein, the rear face of the substrate is intended to mean the face which, when using the article, is the nearest from the wearer's eye. It is generally a concave face. On the contrary, the front face of the substrate is the face which, when using the article, is the most distant from the wearer's eye. It is generally a convex face. The optical article can also be a piano article.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more functional coatings or layers.

The substrate of the optical article may be a mineral or an organic glass, for instance an organic glass made from a thermoplastic or thermosetting plastic, generally chosen from transparent materials of ophthalmic grade used in the ophthalmic industry.

To be mentioned as especially preferred classes of substrate materials are polycarbonates, polyamides, polyimides, polysulfones, copolymers of polyethylene therephthalate and polycarbonate, polyolefins such as polynorbornenes, resins resulting from polymerization or (co)polymerization of alkylene glycol bis allyl carbonates such as polymers and copolymers of diethylene glycol bis(allylcarbonate) (marketed, for instance, under the trade name CR-39® by the PPG Industries company, the corresponding marketed lenses being referred to as ORMA® lenses from

ESSILOR), polycarbonates such as those derived from bisphenol A, (meth)acrylic or thio(meth)acrylic polymers and copolymers such as polymethyl methacrylate (PMMA), urethane and thiourethane polymers and copolymers, epoxy polymers and copolymers, episulfide polymers and copolymers.

Prior to depositing coatings, the surface of the substrate is usually submitted to a physical or chemical surface activating and cleaning treatment, so as to improve the adhesion of the layer to be deposited, such as disclosed in WO 2013/013929.

The dye according to the invention is generally incorporated into the substrate of the optical article and/or into at least one layer coated on the substrate. Several dyes can be incorporated in the substrate and/or the same or different layers deposited at the surface of the substrate.

In a first preferred embodiment, the optical article comprises a substrate into which the at least one absorbing dye is incorporated. The dye can be incorporated into the mass of the substrate by methods well known in the art, for example:

I.impregnation or imbibition/tinting methods consisting in dipping the substrate in an organic solvent and/or water based hot coloration bath, preferably a water based solution, for several minutes. Substrates made from organic materials such as organic lens substrates are most often colored in the bulk of the material by dipping in aqueous coloration baths in which the dye has been dispersed, heated to temperatures of the order of 80-95°C. The dye thus diffuses under the surface of the substrate and the color density is obtained by adjusting the quantity of dye diffusing in the body of the substrate.

II.the diffusion methods described in JP 2000-314088 and JP 2000-241601, involving an impregnable temporary coating, or

III.contactless coloration using a sublimable material, such as described in US 6534443 and US 6554873, or

IV.incorporation of an absorbing dye during the manufacture of the substrate itself, for example by casting or injection molding. This is preferably carried out by mixing the dye in the optical material composition (an optical material resin or a polymerizable composition) and then forming the substrate by curing the (liquid) composition in an appropriate mold. More specifically, the optical material composition is poured into the cavity of a mold held together using a gasket or tape. Depending on the desired characteristics of the resulting optical material, degassing can be performed under reduced pressure and/or filtration can be performed under increased pressure or reduced pressure before pouring the optical material composition in the mold. After pouring the composition, the casting mold, preferably a lens casting mold, can be heated in an oven or a heating device immersed in water according to a predetermined temperature program to cure the resin in the mold. The resin molded product may be annealed if necessary. This method is not recommended when the dye is not sufficiently resistant to the high temperatures involved during casting or injection molding.

In a second preferred embodiment, the transparent optical article comprises a substrate and at least one layer coated on the substrate, wherein the dye is incorporated into said at least one layer coated on the substrate. In this embodiment, the present invention uses a specific coating dedicated to the filtering function, which avoids modifying the added values provided by the other functional coatings that may be traditionally present at the surface of the optical article.

The coating deposited onto a main surface of the optical article in which the absorbing dye is incorporated may be, for example, an abrasion- and/or scratch-resistant coating (hard coating), a primer coating, which generally promotes adhesion of the hard coating to the substrate, and/or an antireflection coating. The dye can also be incorporated into a film that will be subsequently transferred, laminated, fused or glued to the substrate. The expressions "coating" or "film" exclude substrates of optical articles.

Several methods familiar to those practiced in the art of optical manufacturing are known for incorporating the dye in a layer. The absorbing dye may be deposited at the same time as the layer, i.e., when the layer is prepared from a liquid coating composition, the dye can be incorporated (directly or for example as dye-impregnated particles) or dissolved in said coating composition before it is applied (in situ mixing) and hardened at the surface of the substrate.

The dye may also be included in a coating in a separate process or sub-process. For example, the dye may be included in the coating after its deposition at the surface of the substrate, using a dipping coloration method similar to that referred to for coloring the substrate, i.e., by means of a tinting bath at elevated temperatures, through the diffusion method disclosed in US 2003/0020869, in the name of the applicant, through the method disclosed in US 2008/127432, in the name of the applicant, which uses a printing primer that undergoes printing using an inkjet printer, through the method disclosed in US 2013/244045, in the name of the applicant, which involves printing with a sublimation dye by means of a thermal transfer printer, or though the method disclosed in US 2009/047424, in the name of the applicant, which uses a porous layer to transfer a coloring agent. The dye may also be sprayed onto a surface before the coating is cured (e.g., thermally or UV cured), dried or applied.

When implementing ink jet printing, it is generally necessary to modify the surface of the article to receive the ink, typically by applying an ink receptive coating on the surface of the article. The ink receptive coating may be a

permanent tintable coating or a temporary tintable coating being used as a temporary support from which the dyes are transferred into the article. The dyes may be transferred in the substrate itself or in a coating of the substrate, adjacent to the ink receptive coating. Ink jet printing for tinting a substrate or coating is described with more details in US 2013/0230649, in the name of the applicant.

Obviously, combinations of several of the above described methods can be used to obtain an optical article having at least one dye incorporated therein.

The absorbing dye is incorporated into an epoxy coating deposited onto a main surface of said optical article.

In another embodiment, the absorbing dye is incorporated into a sol-gel coating deposited onto a main surface of said optical article, typically a coating comprising organic polysiloxanes such as any one of the abrasion- and/or scratch-resistant coatings described hereunder.

The epoxy coating that may be used in the present invention results from the polymerization of at least one epoxy compound, preferably a compound comprising at least one epoxy group and at least one cycloaliphatic or aryl group and having a ratio number of carbon atoms / number of oxygen atoms in said at least one epoxy compound being higher than or equal to 3.

The epoxy compounds according to the invention are cyclic ethers and are preferably epoxides (oxiranes). As used herein, the term epoxide represents a subclass of epoxy compounds containing a saturated three-membered cyclic ether.

The epoxy compounds according to the invention preferably comprise at least two epoxy groups. Generally, these compounds contain 2 to 3 epoxy groups per molecule, albeit polyfunctional epoxy compounds containing more than 3 epoxy groups per molecule (generally 4-8) can also be used in addition to or in replacement of epoxy compounds containing 2 to 3 epoxy groups. Preferably, they contain no more than 4, better no more than 3 epoxy groups, and even better are diepoxydes.

In one embodiment, the epoxy compounds according to the invention do not comprise any silicon atom having at least one hydrolyzable group directly linked to the silicon atom. More preferably, epoxy compounds according to the invention do not contain other reactive function than the epoxy group(s), capable of reacting with other polymerizable functions present in the composition and that would be linked to the polymer matrix of the coating. In other words, preferred epoxy compounds are "pure" epoxy compounds.

The epoxy compound according to the invention preferably comprises at least one of a glycidyl ether group (preferably an aryl glycidyl ether group) and a β-(3,4-epoxycyclohexyl)alkyl group such as the β-(3,4-epoxycyclohexyl)methyl and β-(3,4-epoxycyclohexyl)ethyl groups. Glycidyl ethers are synthetic compounds characterized by the following group in which R1 denotes a monovalent group:

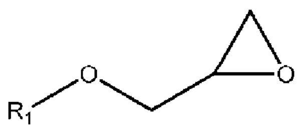

The preferred epoxy compounds comprising at least one cycloaliphatic group preferably comprise at least one group selected from the groups:

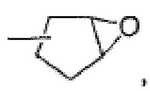 , 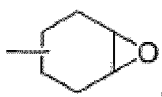 , 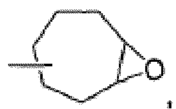 ,

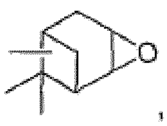 , 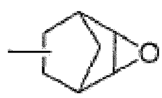 , and 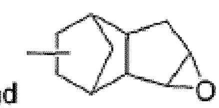

in which the hydrogen atoms in the structures may be substituted by one or more substituents such as those cited above as substituents for an aryl group.

Examples of preferred epoxy compounds include 3',4'-epoxycyclohexylmethyl-3,4-epoxycyclohexane carboxylate (Uvacure® 1500 from UCB Chemicals, Cyracure® UVR-6110 and UVR® 6105 from Union Carbide), bis (3,4-epoxycyclohexylmethyl) adipate (UVR-6128 from Dow Chemical Company), 1,1,1-tris-(p-hydroxy phenyl) ethane triglycidyl ether (EPALLOY® 9000 from CVC Specialty Chemicals), limonene diepoxide (6-methyl-3-(2-methyloxiran-2-yl)-7-oxabicyclo[4.1.0]heptane, Celloxide 3000 from Daicel Chemical Industries Ltd.), 1,1,1-tris-(p-hydroxyphenyl) methane triglycidyl ether (Tactix 742 from Ciba), hydrogenated bisphenol A diglycidyl ether (Epalloy® 5000 from CVC Specialty

Chemicals), bisphenol A diglycidyl ether resins (with preferably up to 25 monomer units, Epon 828 from Shell Chemical), tetrakis (4-hydroxyphenyl) ethane tetraglycidyl ether (Epon 1031 from Shell Chemical), epoxycyclohexyl POSS® Cage Mixture (EP0408 from Hybrid Plastics), 1,3-bis[2-(3,4-epoxycyclohexyl)ethyl]tetramethyldisiloxane (SIB1092.0 from Gelest).

It is possible to add to the composition additional polymerizable epoxy compounds such as trimethylolpropane triglycidyl ether (Erisys™ GE-30, from CVC thermoset Specialties), sorbitol hexaglycidyl ether (Erisys™ GE-60, from CVC thermoset Specialties), ethylene glycol diglycydyl ether, or an epoxy compound bearing at least one silicon atom having at least one hydrolyzable group directly linked to the silicon atom and at least one group comprising an epoxy function linked to the silicon atom though a carbon atom such as γ-glycidoxypropyl trimethoxysilane.

The compositions of the present invention advantageously further contain small amounts, preferably from 0.005 to 1 % by weight, based on the total weight of the composition, of at least one surface active compound (surfactant), more preferably from 0.02 to 1 %, still more preferably from 0.025 to 0.5 %. The surfactant is important for good wetting of the substrate resulting in satisfactory cosmetics of the final coating. Said surfactant can include for example poly(alkylene glycol)-modified polydimethylsiloxanes or polyheptamethylsiloxanes, or fluorocarbon-modified polysiloxanes. Preferred surfactants are fluorinated surfactant such as Novec® FC-4434 from 3M (non ionic surfactant), Unidyne™ NS-9013, and EFKA® 3034 from CIBA (fluorocarbon-modified polysiloxanes).

The epoxy compounds of the composition are submitted to a polycondensation and/or cross-linking reaction generally in the presence of an epoxy ring-opening catalyst.

Preferred catalysts found to be able to cure the epoxy composition at temperatures low enough (preferably ≤ 110°C, more preferably ≤ 100°C) not to damage the underlying substrate or cause adverse affects to other coatings or coating components includes (strong) acid catalysts, ammonium salts of metal anions and aluminium-based compounds such as aluminium chelates, aluminium acylates and aluminium alcoholates, designed for ring opening polymerization of cyclic ether groups.

In order to obtain storage-stable heat curable compositions, the catalyst should not catalyze the epoxy ring-opening at room temperature, to prevent premature polymerization or formation of pre-polymers in the coating compositions with time during storage or while in production, thus extending the pot-life and shelf-life thereof without evolution of performance with time. In this regard, the catalyst is preferably a blocked catalyst or a latent catalyst (such as a buffered acid catalyst), blocked catalyst being preferred as latent catalysts may still react at ambient temperature and cause the composition to slightly evolve with time. Blocked catalysts will not react until reaching their respective deblocking temperatures. The preferred catalysts are inactive at ambient temperature (20°C) and activated to catalyze epoxy ring-opening only upon heating, generally to 70-80°C or more.

Exemplary blocked or latent catalysts are based on trifluoromethanesulfonic acid (triflic acid), dinonylnaphthalene sulfonic acid, dinonylnaphthalene disulfonic acid (DNNDSA), and ammonium antimony hexafluoride (a Lewis acid) and are available from King Industries for example Nacure® Super A233 (diethylamine salt of trifluoromethanesulfonic acid), Nacure® 155 (a blocked acid catalyst based on DNNDSA), Nacure® Super XC-7231 and K-pure® CXC 1612 (blocked ammonium antimony hexafluoride catalysts), and Nacure® Super XC-A218 (metal salt of triflic acid, Lewis acid, buffered to reduce its reactivity at ambient temperature), the latter being one of the preferred catalyst. Other useful catalysts include carboxylic acid anhydrides such as hexahydrophthalic anhydride, methylhexahydrophthalic anhydride, or Lewis acid catalysts including $BF_3$ and $BCl_3$ amine complexes.

The catalyst is generally used in amounts ranging from 0.01-5 % by weight based on the weight of the composition, preferably from 0.1 to 3 % by weight.

The composition according to the invention generally contains 25-75 % by weight of solids (dry extract weight of the composition), preferably from 35 to 55 %.

The composition generally contains at least one solvent, which is preferably a glycol monoether. The glycol monoether solvent generally exhibits low surface tensions and is preferably propylene glycol methyl ether. Such a compound is sold commercially by Dow Chemical under the name Dowanol PM® as a mixture of 1-methoxy-2-propanol (major isomer) and 2-methoxy-1-propanol. Additional or alternative solvents can be used, such as alkanols (methanol, ethanol, propanol...), ketones or water.

The total amount of solvent depends on the resins used, on the type of optical article and on the coating process. The purpose of the solvent is to achieve good surface wetting and a specific coating viscosity range determined by the coating equipment used to achieve a specific coating thickness range. The solvent typically represents from 25 to 75 % of the weight of the composition, preferably from 35 to 65 %, more preferably from 40 to 60 %.

The composition can also include at least one compound, or a hydrolyzate thereof, of formula $M(Z)_y$, wherein M represents a metal or a metalloid, preferably Si, the Z groups, being the same or different, are hydrolyzable groups and y, equal to or higher than 4, is the metal or metalloid M valence. Such compounds are described in detail in US 2011/0058142. The preferred compounds are compounds of formula $Si(Z)_4$, wherein the Z groups, being the same or different, are hydrolyzable groups, such as tetraethoxysilane.

The composition can further include fillers such as oxides of metals or metalloids, for example silica, preferably

used under a colloidal form, and various additives such as curing/cross-linking agents (e.g. silane coupling agents or comonomers such as polyamines, polythiols, polyols, polycarboxylic acids), rheology modifiers, flow and leveling additives, wetting agents, antifoaming agents, stabilizers, and color balancing agents. The composition can be a solution or a dispersion.

According to the invention, the optical article comprises at least one absorbing dye. The absorbing dye has a conjugated chromophore, i.e., a chromophore comprising a conjugated system, selected from those of formulae (I) to (IV). As used herein a chromophore refers to the part of a dye molecule, generally a group of atoms, which is responsible for the dye's color. Said dye may refer to both a pigment and a colorant, i.e., can be insoluble or soluble in its vehicle. Due to this chemical structure, the dye according to the invention absorbs in the visible wavelength range (380-780 nm). It may also absorb in another wavelength range of the light spectrum, such as the UV range (100-380 nm) or the NIR range (780-1400 nm).

The dye generally at least partially inhibits transmission of light in at least one selected wavelength range, preferably included within the visible light range (380-780 nm), the 100-380 nm wavelength range, and/or the 780-1400 nm wavelength range.

In a preferred embodiment, the selected spectral range within the 380-780 nm region of the electromagnetic spectrum is 400 nm to 500 nm, i.e., the blue wavelength range, more preferably the 415-455 nm range or the 420-450 nm range.

In the present disclosure, the (absorbing) dye will be referred to as a blue light blocking dye when the selected wavelength range is 400-500 nm, and is typically a yellow dye.

The optical article inhibits transmission of incident light through at least one geometrically defined surface of the substrate of the optical article, preferably an entire main surface. In the present description, unless otherwise specified, light blocking is defined with reference to an angle of incidence ranging from 0° to 15°, preferably 0°.

The dye preferably at least partially inhibits transmission of light within the 415-455 nm wavelength range by absorption, more preferably within the 420-450 nm range, in order to provide a high level of retinal cell protection against retinal cell apoptosis or age-related macular degeneration.

It may be particularly desirable in some cases to selectively filter a relatively small portion of the blue spectrum, i.e., the 420 nm - 450 nm region. Indeed, blocking too much of the blue spectrum can interfere with scotopic vision and mechanisms for regulating biorhythms, referred to as "circadian cycles". Thus, in a preferred embodiment, the dye blocks less than 5 % of light having a wavelength ranging from 465 to 495 nm, preferably from 450 to 550 nm. In this embodiment, the dye selectively inhibits the phototoxic blue light and transmits the blue light implicated in circadian rhythm. Preferably, the optical article transmits at least 95 % of light having a wavelength ranging from 465 to 495 nm. This transmittance is an average of light transmitted within the 465-495 nm range that is not weighted according to the sensitivity of the eye at each wavelength of the range. In another embodiment, the dye does not absorb light in the 465-495 nm range, preferably the 450-550 nm range. In the present description, unless otherwise specified, transmittances/transmissions are measured at the center of the optical article for a thickness ranging from 0.5 to 2.5 mm, preferably 0.7 to 2.0 mm, more preferably 0.8 to 1.5 mm, at an angle of incidence ranging from 0° to 15°, preferably 0°.

In one embodiment, the dye does not absorb, or very little, in regions of the visible spectrum outside the selected wavelength range, preferably the 400-500 nm wavelength range, to minimize the appearance of a plurality of colors. In this case, the dye selectively inhibits transmission of light within the selected wavelength range, preferably the 400-500 nm wavelength range, more preferably in the 415-455 nm or 420-450 nm ranges. As used herein, a dye "selectively inhibits" a wavelength range if it inhibits at least some transmission within the specified range, while having little or no effect on transmission of wavelengths outside the selected wavelength range, unless specifically configured to do so.

The dye preferably has an absorption peak, ideally a maximum absorption peak, within the 380-780 nm range, more preferably the 400-500 nm range. Certain dyes are interesting in that they have a narrow absorption peak, thus providing selective absorption filters having a bandwidth in some cases of for example 20 nm or less in the selected range of wavelengths. The selectivity property may be in part provided by the symmetry of the dye molecule. Such selectivity helps to limit the distortion of the visual perception of color, to limit the detrimental effects of light filtering to scotopic vision and to limit the impact on circadian rhythm.

The dyes according to the invention presenting improved photo-resistance properties are compounds having a group of formula (I), (Ia), (II), (III) or (IV) corresponding to four different families, preferably a group of formula (I), (Ia), (II) or (III). They have at least one carbon atom substituted with a group chosen from -OH, -CN, bromo, $-NO_2$, alkoxy, aryloxy, $-CO_2H$, -CHO, - COalkyl, -COaryl, haloalkyl, -SH, -S-alkyl, -S-aryl, $-SO_2$alkyl, $-OSO_2$alkyl, $-SO_2$aryl, $-OSO_2$aryl and sulfonamide, preferably from -OH, -CN, bromo, $-NO_2$, alkoxy, aryloxy, -COOH, -CHO, - COalkyl, -COaryl, haloalkyl, -SH, -S-alkyl, -S-aryl, $-OSO_2$alkyl, and $-OSO_2$aryl. These groups have been found to stabilize these families of dyes toward photo-degradation, which can be checked by performing a sun light test described in the experimental part. Said carbon atom is generally an sp2 carbon atom. In other words, the above stabilizing groups are typically connected to an aryl group of the core structure.

The group of formula (Ia) can be, but is not necessarily, substituted with a group of this list, since it already

bears two stabilizing groups. indeed, the compounds of formula (Ia) are compounds of formula (I) substituted with a stabilizing cyclic imide group (3,4,9,10-tetracarboxylic diimide group when $X^1$ or $X^2$ represents a N-$R^1$ group) and/or with a stabilizing cyclic carboxylic anhydride group (3,4,9,10-tetracarboxylic dianhydride group when $X^1$ or $X^2$ represents an oxygen atom).

The most preferred stabilizing groups for compounds (I), (Ia), (II), (III) and (IV) are -OH, - CN, bromo, $NO_2$, alkoxy and aryloxy.

In the present patent application, the term "alkyl" means a linear or branched, saturated or unsaturated monovalent hydrocarbon-based radical, preferably containing from 1 to 25 carbon atoms. The term alkyl includes acyclic groups preferably containing from 1 to 8 carbon atoms, more preferably from 1 to 6 carbon atoms, such as methyl, ethyl, n-propyl, isopropyl, butyl and n-hexyl groups, the cycloaliphatic and cycloalkyl groups preferably containing from 3 to 7 carbon atoms, the cycloalkylmethyl groups preferably containing from 4 to 8 carbon atoms.

The alkyl group is connected via an sp3 carbon atom and may be substituted with one or more aryl groups and/or may comprise one or more heteroatoms such as N, S, O or an halogen. Examples that can be mentioned include arylalkyl groups such as the trityl group (-CPh3), the benzyl group or the 4-methoxybenzyl group, alkoxyalkyl groups, especially dialkoxymethyl groups such as diethoxymethyl or dimethoxymethyl groups, $CH_2CO_2R^{11}$ groups, in which $R^{11}$ represents an optionally substituted alkyl or aryl group.

The term "cycloalkyl" also includes "heterocycloalkyl" groups, i.e. non-aromatic monocyclic or polycyclic rings in which one or more carbon atoms of the ring(s) have been replaced with a heteroatom such as nitrogen, oxygen, phosphorus or sulfur. The heterocycloalkyl group preferably comprises 1 to 4 endocyclic heteroatoms. The heterocycloalkyl groups may be structures containing one or more nonaromatic rings.

The term "cycloaliphatic" denotes a saturated or unsaturated but non aromatic carbocyclic radical comprising one or several optionally fused rings, which may optionally be substituted with one or more of the groups cited hereunder for the aryl group. The term "cycloaliphatic" also includes "heterocycloaliphatic" groups, i.e. non-aromatic monocyclic or polycyclic rings in which one or more carbon atoms of the ring(s) have been replaced with a heteroatom such as nitrogen, oxygen, phosphorus or sulfur. The cycloaliphatic group is preferably a cycloalkyl group.

The term "aryl" denotes a monovalent carbocyclic radical having an aromatic character comprising only one ring (for example a phenyl group) or several, optionally fused, rings (for example naphthyl or terphenyl groups), which may optionally be substituted with one or more groups such as, without limitation, alkyl (for example methyl), hydroxyalkyl, aminoalkyl, hydroxyl, thiol, amino, halo (fluoro, bromo, iodo or chloro), nitro, alkylthio, alkoxy (for example methoxy), aryloxy, monoalkylamino, dialkylamino, acyl, carboxyl, alkoxycarbonyl, aryloxycarbonyl, hydroxysulfonyl, alkoxysulfonyl, aryloxysulfonyl, alkylsulfonyl, alkylsulfinyl, cyano, trifluoromethyl, tetrazolyl, carbamoyl, alkylcarbamoyl or dialkylcarbamoyl groups. Alternatively, two adjacent positions of the aromatic ring may be substituted with a methylenedioxy or ethylenedioxy group.

The term "aryl" also includes "heteroaryl" groups, i.e. aromatic rings in which one or more carbon atoms of the aromatic ring(s) have been replaced with a heteroatom such as nitrogen, oxygen, phosphorus or sulfur. Aryl groups generally comprise 6 to 8 cyclic carbon atoms.

The term "alkoxy" denotes an alkyl group (preferably a C1-C6 alkyl group) connected to the rest of the molecule via an oxygen atom, for example an ethoxy, methoxy or n-propoxy group. The term "aryloxy" denotes an aryl group connected to the rest of the molecule via an oxygen atom, for example a benzoxy group.

The term "sulfonamide group" denotes a group of formula $-SO_2NR^4R^5$, $R^4$ and $R^5$ independently denoting an optionally substituted aryl or alkyl group or a hydrogen atom.

The preferred dyes will now be indicated, i.e., those having the better light stability.

In a preferred embodiment, the groups of formulae (I), (II), (III) and (IV) have at least one carbon atom substituted with an electron donating group (preferably at least two) and/or at least one carbon atom substituted with an electron withdrawing group (preferably at least two), the electron donating group and the electron withdrawing group when both present being preferably located on two different aryl groups in the groups of formulae (I), (II), (III) and (IV).

Preferably, the group of formula (Ia) has at least one carbon atom substituted with an electron donating group, preferably at least two. Without wishing to be bound by theory, it is believed that strong intermolecular interactions between an electronegative part of the dye and an electropositive part of the dye result in an improved light-stability of said dye. Increasing molecular conjugation by means of substituents is another factor that might favorably influence photo-stability of the dyes.

Dyes having a group of formula (I) or (Ia) are perylene dyes. Preferred perylene compounds have a group of formula (I) substituted with at least one cyano group and at least one alkoxy group. The group of formula (I) is preferably substituted in positions 3 and 9 with identical or different electron withdrawing groups such as cyano groups, and/or is preferably substituted in positions 4 and 10 with identical or different electron donating groups such as alkoxy groups.

Other preferred perylene compounds have a group of formula (Ia) in which $X^1$ and $X^2$ independently represent a N-$R^1$ group in which $R^1$ is preferably an aryl group, more preferably a hindered aryl group such as a mesityl group, a 2,6-diisopropylphenyl group or a 2,6-di-t-butylphenyl group, and the group of formula (Ia) is preferably substituted with

at least one aryloxy group, more preferably with from one to four aryloxy groups in positions 1, 6, 7 and/or 12.

In a preferred embodiment, dyes of formula (I) or (Ia) have substituents have substituents that are symmetrically distributed relative to the symmetry axis of the core perylene structure.

Dyes having a group of formula (II) are quinophthalone dyes. Preferred quinophthalone compounds have a group of formula (II) substituted with at least two identical or different halogen atoms on the phthalone part, more preferably at least three halogen atoms, and ideally four. The halogen groups are preferably chosen from F, Cl and Br, more preferably Cl. Other preferred quinophthalone compounds have a group of formula (II) substituted with an hydroxyl group in position 3 of the quinoline part (which may form an intramolecular hydrogen bond with an adjacent C=O group, leading to a higher stability, according to a non-binding interpretation), and optionally with an halogen atom in position 4 of the quinoline part, preferably chosen from F, Cl and Br, more preferably Br. In a preferred embodiment, the quinoline part of the dye comprises at least one electron donating group and at least one electron withdrawing group.

Dyes having a group of formula (III) are diarylazo dyes (aryl azo dye with a 2-pyridone group). In such compounds, R preferably represents an alkyl group, more preferably a C1-C3 alkyl group. The dye of formula (III) does not comprise any $SO_3H$ group or a salt thereof.

Preferred diarylazo compounds have a group of formula (III) substituted with a hydroxy group in position 6 of the 2-pyridone group (which may form an intramolecular hydrogen bond with the adjacent azo N=N group, leading to a higher stability, according to a non-binding interpretation). Other preferred diarylazo compounds have a group of formula (III) substituted with an electron withdrawing group such as a cyano group in position 3 of the 2-pyridone group, and/or with an alkyl group in position 4 of the 2-pyridone group. The aryl group in the group of formula (III) is preferably substituted with at least one electron withdrawing group such as halogen (F, Cl, Br, preferably Cl), nitro, or a sulfonic ester group connected to the aryl group through an oxygen atom (preferably an alkylsulfonic ester or a phenylsulfonic ester group), more preferably at least two electron withdrawing groups.

Dyes having a group of formula (IV) are 1-nitrodiphenylamine dyes. Preferred 1-nitrodiphenylamine compounds have a group of formula (IV) substituted with at least one electron donating group on the phenyl part (i.e., the phenyl ring that does not bear the nitro group), preferably an alkoxy group ideally located in 4-position. Other preferred 1-nitrodiphenylamine dyes have a group of formula (IV) substituted with at least one electron withdrawing group on the nitrophenyl part, preferably a sulfonamide group connected thereto though its sulfur atom, ideally located in 4-position. The sulfonamide is preferably a group of formula $SO_2NR^aR^b$, in which $R^a$ and $R^b$ are identical or different groups chosen from H, aryl, alkyl, more preferably $SO_2NHR^c$ or $SO_2NR^dR^e$ groups, in which $R^c$ is an aryl group and $R^d$ and $R^e$ identical or different aryl groups.

In a preferred embodiment, the compounds of formula (I), (Ia), (II), (III) or (IV) have no carbon atom further substituted with a group different from -OH, -CN, -alkyl, chloro, bromo, $-NO_2$, alkoxy, aryloxy, $-CO_2H$, -CHO, -COalkyl, -COaryl, haloalkyl, -SH, -S-alkyl, -S-aryl, $-SO_2$alkyl, - $OSO_2$alkyl, $-SO_2$aryl, $-OSO_2$aryl and sulfonamide, preferably different from -OH, -CN, bromo, - $NO_2$, alkoxy, aryloxy, -COOH, -CHO, -COalkyl, -COaryl, haloalkyl, -SH, -S-alkyl, -S-aryl, - $OSO_2$alkyl, and $-OSO_2$aryl.

The most preferred absorbing dyes are those of formulae (IIa), (IIc) and (IIIa), shown hereunder, which are typically incorporated into a coating deposited onto a main surface of said optical article:

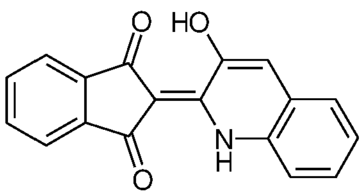
(IIa)

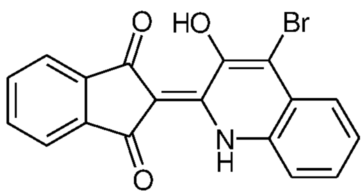
(IIc)

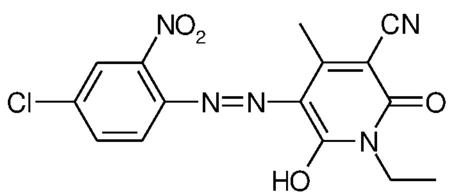
(IIIa)

The dyes according to the invention can be obtained in a few synthetic steps from readily available precursors, or are commercially available. Examples of such dyes that are commercially available are given in the experimental part.

In one embodiment of the invention, the dye of formula (II) is not a compound having any one of the following formulae:

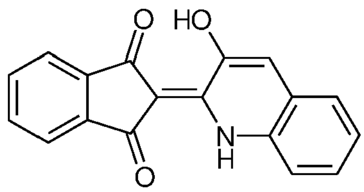
(IIa)

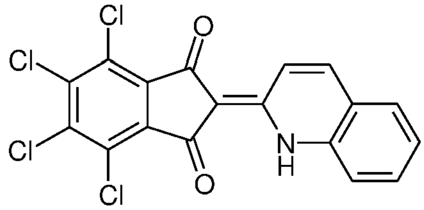
(IIb)

The amount of dye used in the present invention is an amount sufficient to provide a satisfactory absorption of light within the selected wavelength range, in particular a satisfactory protection from blue light when the dye is a blue light blocking dye.

When incorporated into the substrate, the dye is preferably used in an amount lower than 50 ppm relative to the weight of said substrate, more preferably lower than 5 ppm.

When incorporated into a coating present on the substrate, the dye is preferably used in an amount ranging from 0.005 to 1.75 % relative to the weight of the coating, more preferably from 0.01 to 1.25 %, even more preferably from 0.01 to 0.08 %, depending on the strength of the dye and the amount of inhibition/protection desired. It should be understood that the invention is not limited to these ranges, which are only given by way of example.

The dyes according to the invention are generally compatible with most coating and substrate components. They are processed in a way such that they are well and stably distributed or dispersed in the matrix of the coating or substrate, providing transparent clear optical articles with low haze.

The optical article of the invention limits or avoids the photo-degradation of dyes that are generally sensitive to light, in particular UV light, without the need to use UV absorbers and/or free radical scavengers in the coating composition, in another layer or in the substrate, and without the need to use another coating protecting the dye from photo-degradation such as an interferential filter absorbing or reflecting UV light or acting as an oxygen barrier protection.

In one embodiment, a coating composition/a coating/a substrate comprising the dye of the invention comprises less than 0.5 % by weight of compounds selected from UV absorbers and free radical scavengers relative to the coating composition/coating total weight, preferably less than 0.2 % by weight, more preferably less than 0.1 % by weight. In some instances, the composition/coating/substrate neither comprises any UV absorber nor free radical scavenger.

However, the coating composition can also comprise at least one UV absorber and/or at least one free radical scavenger in order to further limit or even eliminate photo-degradation of the dye contained therein. These species can also be incorporated into another coating present at the surface of the optical article or may be present in the substrate.

UV absorbers are frequently incorporated in optical articles in order to reduce or prevent UV light from reaching the retina (in particular in ophthalmic lens materials), but also to protect the substrate material itself, thus preventing it from weathering and becoming brittle and/or yellow.

The UV absorber that may be used in the present invention preferably has the ability to at least partially block light having a wavelength shorter than 400 nm, preferably UV wavelengths below 385 or 390 nm.

Most preferred ultraviolet absorbers have a maximum absorption peak in a range from 350 nm to 370 nm and/or do not absorb light in the 465-495 nm range, preferably the 450-550 nm range, and/or have an absorption spectrum extending to a selected wavelength range within the 400-500 nm region of the electromagnetic spectrum. In one embodiment, the UV absorber does not absorb any substantial amount of visible light.

Suitable UV absorbers include without limitation substituted benzophenones and benzotriazoles compounds. The UV absorber is preferably used in an amount representing from 0.3 to 2 % of the weight of the coating, when incorporated into a coating.

In some embodiments, the coating/substrate comprises at least one free radical scavenger. Free radical scavengers inhibit the formation of or scavenge the presence of free radicals, and include hindered amine light stabilizers (HALS), which protect against photo-degradation, and antioxidants, which protect against thermal oxidation.

Preferably, the coating/substrate comprises at least one hindered amine light stabilizer, and/or at least one antioxidant, more preferably at least one hindered amine light stabilizer and at least one antioxidant. This combination of free radical scavengers offers the best protection from thermal and photo degradation to dyes.

The amount of free radical scavenger that is used is an amount that is effective to stabilize the optical article, which will depend on the specific compounds chosen and can be easily adapted by those skilled in the art.

The UV absorbers and free radical scavengers can be incorporated into the finished product trough different technologies at different locations, generally in a coating such as a hard coat, but also in the bulk substrate, for example by impregnation of the substrate, or by incorporation in a substrate precursor formulation.

Protection of dyes from photo-degradation can also be reinforced by the presence on the optical article of at least one mineral/dielectric layer, preferably at least one mineral/dielectric layer of an antireflection coating.

In this regard, the substrate's main surface can be further coated with several functional coating(s) to improve its optical and/or mechanical properties. The term "coating" is understood to mean any layer, layer stack or film which

may be in contact with the substrate and/or with another coating, for example a sol-gel coating or a coating made of an organic resin. A coating may be deposited or formed through various methods, including wet processing, gaseous processing, and film transfer. The functional coatings used herein can be selected from, without limitation to these coatings, an impact-resistant coating, an abrasion-resistant and/or scratch-resistant coating, an antireflection coating, a polarized coating, a photochromic coating, an antistatic coating, an anti-fouling coating (hydrophobic and/or oleophobic coating), an antifog coating, a precursor of an antifog coating or a stack made of two or more such coatings.

The primer coatings improving the impact resistance and/or the adhesion of the further layers in the end product are preferably polyurethane latexes or acrylic latexes. Primer coatings and abrasion-resistant and/or scratch-resistant coatings may be selected from those described in the application WO 2007/088312.

Abrasion- and/or scratch-resistant coatings (hard coatings) are preferably hard coatings based on poly(meth)acrylates or silanes. Recommended hard abrasion- and/or scratch-resistant coatings in the present invention include coatings obtained from silane hydrolyzate-based compositions (sol-gel process), in particular epoxysilane hydrolyzate-based compositions such as those described in the US patent application US 2003/0165698 and in US 4,211,823 and EP 0614957.

The antireflection coating may be any antireflection coating traditionally used in the optics field, particularly ophthalmic optics. An antireflective coating is defined as a coating, deposited onto the surface of an optical article, which improves the antireflective properties of the final optical article. It makes it possible to reduce the light reflection at the article-air interface over a relatively large portion of the visible spectrum.

As is also well known, antireflection coatings traditionally comprise a monolayered or a multilayered stack composed of dielectric materials (generally one or more metal oxides) and/or sol-gel materials and/or organic/inorganic layers such as disclosed in WO 2013/098531. These are preferably multilayered coatings, comprising layers with a high refractive index (HI) and layers with a low refractive index (LI).

In some aspects, the present invention provides an optical article further comprising a sub-layer, deposited before the antireflective coating, said sub-layer having preferably a refractive index lower than or equal to 1.55. Unless otherwise specified, the refractive indexes referred to in the present invention are expressed at 25°C at a wavelength of 550 nm. The sub-layer is generally less than 0.5 micrometer thick and more than 100 nm thick, preferably more than 150 nm thick, more preferably the thickness of the sub-layer ranges from 150 nm to 450 nm. In another embodiment, the sub-layer comprises, more preferably consists in, silicon oxide, even better silica. Examples of usable sub-layers (mono or multilayered) are described in WO 2012/076174.

In some embodiments, the antireflective coating of the invention includes at least one electrically conductive layer, having preferably a thickness varying from 1 to 15 nm, more preferably from 1 to 10 nm, which typically comprises an optionally doped metal oxide such as indium-tin oxide (ITO) or tin oxide. More details concerning the constitution and location of the antistatic layer can be found in the applications WO 2012/076714 and WO 2010/109154.

The structure and preparation of antireflection coatings are described in more details in patent application WO 2010/109154, WO 2011/080472 and WO 2012/153072.

An antifouling top coat is preferably deposited onto the outer layer of the antireflective coating. As a rule, its thickness is lower than or equal to 10 nm, does preferably range from 1 to 10 nm, more preferably from 1 to 5 nm. Antifouling top coats are generally coatings of the fluorosilane or fluorosilazane type. They may be obtained by depositing a fluorosilane or fluorosilazane precursor, comprising preferably at least two hydrolysable groups per molecule. Fluorosilane precursors preferably comprise fluoropolyether moieties and more preferably perfluoropolyether moieties.

Optool DSX™, KY130™, OF210™, Aulon™ are examples of hydrophobic and/or oleophobic coatings. More detailed information on these coatings is disclosed in WO 2012076714.

Coatings such as primers, hard coats, antireflection coatings and antifouling coatings may be deposited using methods known in the art, including spin-coating, dip-coating, spray-coating, evaporation under vacuum, sputtering, chemical vapor deposition and lamination.

In a preferred embodiment, the optical article of the invention is configured to reduce reflection in the UVA- and UVB-radiation range, in addition to reducing transmission of light in the 380-780 nm wavelength range, so as to allow the best health protection against UV and harmful blue light.

The UV radiation resulting from light sources located behind the wearer may reflect on the lens rear face and reach the wearer's eye if the lens is not provided with an antireflective coating which is efficient in the ultraviolet region, thus potentially affecting the wearer's health. In this regard, the optical article preferably comprises on its rear main face, and optionally on its front main face, an anti-UV, antireflective coating possessing very good antireflective performances in the visible region, and which is at the same time capable of significantly reducing the UV radiation reflection, especially ultraviolet A- and ultraviolet B-rays, as compared to a bare substrate or to a substrate comprising a traditional antireflective coating. Suitable anti-UV, antireflective coatings are disclosed in WO 2012/076714.

The optical article according to the invention preferably has a relative light transmission factor in the visible spectrum Tv higher than or equal to 85 or 87 %, preferably higher than or equal to 90 %, more preferably higher than or equal to 92 %, and better higher than or equal to 95 %. Said Tv factor preferably ranges from 87 % to 98.5 %, more

preferably from 88 % to 97 %, even better from 90 % to 96 %. The Tv factor, also called "luminous transmission" of the system, is such as defined in the standard NF EN 1836 and relates to an average in the 380-780 nm wavelength range that is weighted according to the sensitivity of the eye at each wavelength of the range and measured under D65 illumination conditions (daylight).

The invention also relates to processes to manufacture an optical article such as herein described, comprising providing a substrate, and either depositing on at least one main surface of said substrate a coating composition including at least one absorbing dye according to the invention and curing said composition, or incorporating into said substrate at least one absorbing dye according to the invention.

The coating containing the dye of the invention is deposited on the substrate of the optical article and is preferably in direct contact with said substrate. The deposition is preferably carried out by spin coating or dip coating, and more preferably by dip coating into a bath containing the curable composition.

The composition according to the invention is generally a heat-curable composition. Curing the composition can be performed in two steps, a first pre-curing step to a temperature of at least 70°C, more preferably of 70°C to 120°C, still more preferably of 75°C to 100°C, for at least 5 minutes, generally from 10 to 25 minutes, so as to form a tack-free coating, and a second step of heating the optical article coated with the tack-free coating to a temperature of at least 90°C, preferably of 90°C to 140°C, more preferably of 95°C to 120°C, for at least two hours, preferably for 2.5 to 3.5 hours, so as to obtain a completely cured insoluble coating. The temperature of the first curing step depends on the catalyst used. In case the catalyst activation temperature is higher than 80°C, the optical article must be heated to a higher temperature. The heating temperature of the second curing step preferably does not exceed 120°C, or 115°C. Higher temperatures could be harmful to the dye.

The thickness of the cured coating may be adapted to the specific application required and generally ranges from 0.5 to 50 μm, preferably from 1 to 20 μm, more preferably from 2 to 10 μm. The coating thickness can be easily adjusted by modifying the withdrawal speed in case of deposition by dip coating. The longer the withdrawal time, the thinner will be the final dry coating.

In a preferred embodiment, the process comprises forming on the substrate the coating according to the invention, an impact-resistant coating, an abrasion-resistant and/or scratch-resistant coating, an antireflection coating and an antifouling coating.

The coatings are preferably directly deposited on one another. These coatings can be deposited one by one, or a stack of one or more coatings can be formed on the substrate, for example by lamination.

In one embodiment, the present optical article is prepared by forming on the substrate the coating containing the dye in a first manufacturing site, while the other coatings are formed in a second manufacturing site.

The invention further relates to the use in an optical article for at least partially inhibiting transmission of light in at least one selected wavelength range of an absorbing dye comprising any one of the groups of formulae (I), (Ia), (II) or (III), wherein R, $X^1$ and $X^2$ are such as described previously, and the groups of formulae (I), (II), (III) and optionally (Ia) have at least one carbon atom substituted with a group chosen from -OH, -CN, bromo, $-NO_2$, alkoxy, aryloxy, -COOH, -CHO, -COalkyl, -COaryl, haloalkyl, -SH, -S-alkyl, -S-aryl, $-SO_2$alkyl, $-SO_2$aryl, - $OSO_2$alkyl, and $-OSO_2$aryl, or have at least two carbon atoms substituted with a chloro group, and wherein the dye of formula (III) does not comprise any $SO_3H$ group or a salt thereof, and the dye of formula (II) is not a compound of formula (IIa) or (lib), and said optical article comprises at least one main surface onto which an epoxy coating is deposited, the epoxy coating including said absorbing dye. The preferred selected wavelength ranges are such as disclosed hereabove.

The following examples illustrate the present invention in a more detailed, but nonlimiting manner. Unless stated otherwise, all thicknesses disclosed in the present application relate to physical thicknesses. The percentages given in the tables are weight percentages.

## EXAMPLES

The optical articles used in the examples comprised an ORMA® piano lens substrate from ESSILOR, having a 65 mm diameter, a refractive index of 1.50, a power of -2.00 diopters and a thickness of 1.2 mm.

In examples 1-10 and comparative examples C1-C6, the dyes were incorporated into an epoxy coating composition containing UVACure® 1500 (3',4'-epoxycyclohexylmethyl-3,4-epoxycyclohexanecarboxylate, from Allnex USA Inc., 281 g), Erisys™ GE-60 (sorbitol hexaglycidyl ether, abbreviated as GE-60, from CVC thermoset Specialties, 34 g), Erisys™ GE-30 (trimethylolpropane triglycidyl ether, abbreviated as GE-30, from CVC thermoset Specialties, 69 g), propylene glycol methyl ether as a solvent (Dowanol® PM from Dow Chemical Company, 560 g), a surfactant (EFKA® 3034, which is a fluorocarbon containing organically modified polysiloxane, 50 % wt. in methoxypropanol sold by CIBA, 1 g), and a Lewis acid polymerization catalyst for the epoxy groups (Nacure® Super XC-A218, also named K-pure® CXC-1613, metal salt of triflic acid in n-butanol, 25 % wt., from King Industries, 55 g).

In examples 11 and 12, the dyes were incorporated into commercial sol-gel abrasion-resistant coating compositions mainly containing organo-polysiloxanes, silica colloids or titanium dioxide colloids, methanol and/or 1-methoxy-2-propanol, namely Essilor Altius® (example 11) and SDC CrystalCoat™ C-410 (example 12).

In examples 13 and 14, the dyes were incorporated into the lens substrate by a tinting process.

The following dyes according to the invention were used: Solvent Yellow 157 (λ max = 441 nm, quinophthalone dye), Solvent Yellow 114 (λ max = 446 nm, quinophthalone dye), Solvent Yellow 176 (λ max = 450 nm, quinophthalone dye), LUMOGEN® F Yellow 083 (λ max = 476 nm, perylene dye), LUMOGEN® F Orange 240 (λ max = 528 nm, perylene dye), LUMOGEN® F Red 300 (λ max = 577 nm, perylene dye), Disperse yellow 42 (λ max = 415 nm, nitrodiphenylamine dye), Disperse yellow 86 (λ max = 419 nm, nitrodiphenylamine dye), Disperse yellow 114 (λ max = 424 nm, diarylazo dye), Disperse yellow 211 (λ max = 437 nm, diarylazo dye).

The following comparative dyes were used: Solvent Yellow 33 (λ max = 442 nm, quinophthalone dye), Food Yellow 13 (λ max = 442 nm, quinophthalone dye), perylene (λ max = 440 nm, perylene dye), Solvent Green 5 (λ max = 460 nm, perylene dye), Disperse yellow 26 (λ max = 410 nm, nitrodiphenylamine dye), the yellow dye of formula (V) (λ max = 460 nm, diarylazo dye).

The structures of the various dyes employed herein are recalled hereunder:

| Dye | Solvent Yellow 33 (comparative) | Food Yellow 13 (comparative) | Solvent Yellow 157 | Solvent Yellow 114 |
|---|---|---|---|---|
| Structu re | 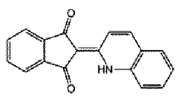 | 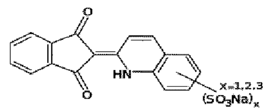 | 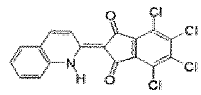 | 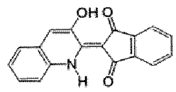 |

| Dye | Solvent Yellow 176 | Perylene (comparative) | Solvent Green 5 (comparative) | LUMOGEN® F Yellow 083 |
|---|---|---|---|---|
| Structure | 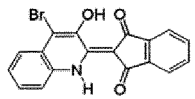 | 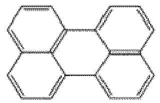 | 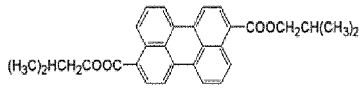 | 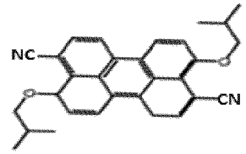 |

| Dye | LUMOGEN® F Orange 240 | LUMOGEN® F Red 300 |
|---|---|---|
| Structure | 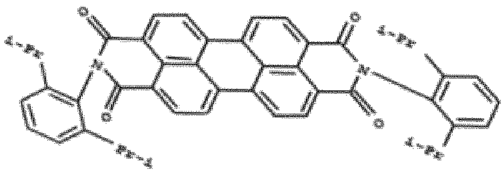 | 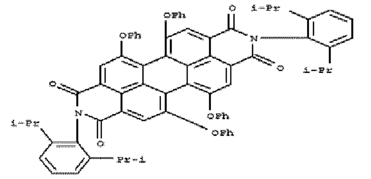 |

| Dye | Disperse yellow 26 (comparative) | Disperse Yellow 42 | Disperse Yellow 86 |
|---|---|---|---|
| Structure | 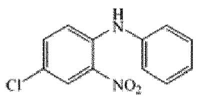 | 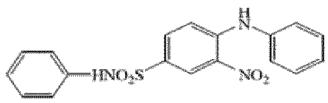 | 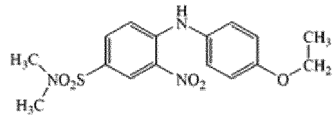 |

| Dye | Yellow dye of formula (V) (comparative) | Disperse yellow 114 | Disperse yellow 211 |
|---|---|---|---|
| Structure | 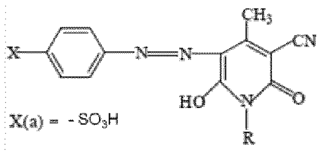 X(a) = - $SO_3H$ R = Me | 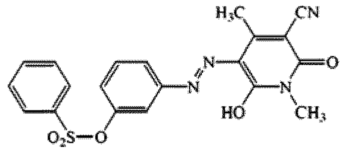 | 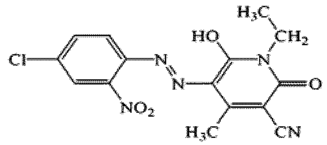 |

1. Incorporation of dye into a coating

The components of the formulations were mixed together well by a stirrer to obtain a 1000 g epoxy coating solution (examples 1-10, C1-C6). The dye (0.04 g for all examples, except example 3: 0.03 g and examples 11, 12: 0.02 g) was added to 100 g of the coating solution (99.8 g for examples 11, 12) and dissolved with the help of a stirrer or an ultrasonic bath.

The prepared formulations contained around 40 % by weight of solids in examples 1-10 and C1-C6 (dry extract weight relative to the weight of the composition). Each of the coating solutions was deposited by dip coating onto both faces of an Orma® lens previously cleaned with diluted NaOH, at a speed of 2.0 mm/s. A pre-curing at 75°C for 15 minutes and a post-curing at 100°C (110°C for example 12) for 3 hours were then performed. The coating thicknesses were about 5 $\mu$m (3-5 $\mu$m for examples 11, 12).

2. Incorporation of dye into a substrate by a dip tinting process

A tinting bath was prepared by adding to 1 L of water heated at 85°C 6 g of the dispersing agent Super NSI (Sodium and potassium dinaphthalene methanesulphonate). While the mixture was continuously heated and stirred, 1.5 g of dye was added and the mixture was stirred for 2 hours at 94°C. In the end, the solution was covered with a lid.

The Orma® lens substrates were cleaned with the solvent Techsolv SR to remove potential stains or any foreign materials, placed onto a substrate holder and dipped in the tinting bath for 10 minutes (example 14) or 30-60 minutes (example 13). The tinted substrates still hold by the substrate holder were removed from the tinting bath, cleaned by rinsing in a deionized water bath to remove dye particles adhered to the substrate, placed into an oven and cured at 100°C for 2 hours.

3. Evaluation of the coating performances

a) Dye photo-degradation in coatings was measured by subjecting the prepared lenses to the Q-sun test. This test uses a Q-SUN® Xe-3 xenon chamber, purchased from Q-LAB, at a relative humidity of 20% ($\pm$5%) and at a temperature of 23°C ($\pm$5°C).

A sample lens coated with a coating containing at least one dye was measured by a Cary® 50 spectrophotometer to get a transmission (T%) spectrum. Then the lens was introduced in the xenon chamber and its convex side was exposed to the light for 40 hours (h) inside the Q-sun chamber. The lens was measured by the Cary® 50 spectrophotometer again to get a T% spectrum. An uncoated Orma® lens was used as the reference lens, tested before & after the 40 hours of sun exposure test as well. Because there was very little change of the Orma® lens spectrum before & after the sun exposure test, its change was neglected during the calculation.

The formula used to calculate the photo-degradation level of the dye in a coating coated on Orma® lens or in a tinted Orma® lens is described below, using the transmittance % at $\lambda$ max:

$$\text{Dye photo-degradation} = (T\%_{\text{dye}\lambda\text{ max 40h}} - T\%_{\text{dye}\lambda\text{ max 0h}}) / (T\%_{\text{Orma }\lambda\text{ max 40h}} - T\%_{\text{dye}\lambda\text{ max 0h}})$$

For example, an Orma® lens coated with a dye containing coating ($\lambda$max of the dye: 580 nm) showed 80% of transmittance initially, which changed to 86% after 40 hours of Q-sun exposure test. The reference Orma® lens showed 92% of initial transmittance at 580nm, which only changed to 91.8% after 40 hours of Q-sun exposure, indicating almost no change of Orma® lens at this wavelength. In this case, blue dye photo-degradation = (86-80) / (92-80)*100 = 50 %.

b) Haze was measured as disclosed in WO 2012/173596, on a Hazeguard XL 211 Plus apparatus from BYK-Gardner in accordance with the standard ASTM D1003-00. As haze is a measurement of the percentage of transmitted light scattered more than 2.5° from the axis of the incident light, the smaller the haze value, the lower the degree of cloudiness. Generally, for optical articles described herein, a haze value of less than or equal to 0.3 % is acceptable, more preferably of less than or equal to 0.2 %.

4. Incorporation of dye into epoxy and sok-gel coating compositions: results

The various dyes used to prepare the compositions 1-12 according to the invention and the comparative compositions C1-C6 as well as the results of the tests performed are shown in the tables hereunder.

| Example | C1 | C2 | 1 | 2 | 3 |
|---|---|---|---|---|---|
| Dye | Solvent Yellow 33 | Food Yellow 13 | Solvent Yellow 157 | Solvent Yellow 114 | Solvent Yellow 176 |
| Photo-degradation (%) | 91 | 87 | 19 | 9 | 2 |
| Haze (%) | 0.1 | 0.1 | 1 | 0.1 | 0.1 |

| Coating | C3 | C4 | 4 | 5 | 6 |
|---|---|---|---|---|---|
| Dye | Perylene | Solvent Green 5 | LUMOGEN® F Yellow 083 | LUMOGEN® F Orange 240 | LUMOGEN® F Red 305 |
| Photo-degradation (%) | 86 | 45 | 20 | 21 | 15 |
| Haze (%) | 0.1 | 0.1 | 0.1 | 0.1 | 0.1 |

| Coating | C5 | 7 | 8 | C6 | 9 | 10 |
|---|---|---|---|---|---|---|
| Dye | Disperse Yellow 26 | Disperse Yellow 42 | Disperse Yellow 86 | Yellow dye of formula XX | Disperse Yellow 114 | Disperse Yellow 211 |
| Photo-degradation (%) | 50 | 20 | 0 | > 40 | 15 | < 10 |

| Example | 11 | 12 |
|---|---|---|
| Dye | Solvent Yellow 114 | Solvent Yellow 114 |
| Coating solution | Essilor Altius® | SDC CrystalCoat™ C-410 |
| Photo-degradation (%) | 27 | 23 |
| Haze (%) | 0.1 | 0.1 |

The tables show that the photo-degradation of dyes having a structure according to the invention is very limited under the Q-sun test conditions when incorporated into a coating (< 27 %), while comparative dyes are much more unstable under the same conditions (45-91 % of degradation).

The haze of all coated lenses was 0.1%, except for example 1. In example 1, the level of haze was higher due to poor solubility of Solvent Yellow 157 in the coating composition. A low haze result demonstrates that there is a good compatibility between the coating components and the dye molecules.

5. Photo-degradation results after deposition of further coatings onto the dye-containing coating

A means to reduce and even eliminate the photo-degradation of the dye is to deposit on the coating containing the dye an antireflection coating acting as an oxygen barrier or an UV shield. Two of such antireflection coatings have been used in the examples shown in the tables below and eliminated the photo-degradation of dyes according to the invention (Solvent Yellow 157 and Solvent Yellow 114) during the Q-sun photo-degradation test, while the same antireflection coatings only allowed to reduce photo-degradation down to 36-57 % for comparative dyes (Solvent Yellow 33 and Solvent Green 5). Thus, even if the dyes according to the invention undergo up to 20-25 % degradation during the Q-sun photo-degradation test in examples 1-12, they are good candidates for ophthalmic lens applications as such degradation can be suppressed by the presence of an anti-reflection coating.

| Example | C1 | C1-1 | C1-2 | C1-3 |
|---|---|---|---|---|
| Epoxy coating containing 0.04 % dye | Yes | Yes | Yes | Yes |
| Primer + Hard coat | No | Yes | Yes | Yes |
| Antireflection coating 1 | No | No | Yes | No |
| Antireflection coating 2 | No | No | No | Yes |
| Photo-degradation (%) | 91 | 88 | 57 | 50 |

| Example | C4 | C4-1 | C4-2 | C4-3 |
|---|---|---|---|---|
| Epoxy coating containing 0.04 % dye | Yes | Yes | Yes | Yes |
| Primer + Hard coat | No | Yes | Yes | Yes |
| Antireflection coating 1 | No | No | Yes | No |
| Antireflection coating 2 | No | No | No | Yes |
| Photo-degradation (%) | 45 | 45 | 40 | 36 |

| Example | 1 | 1-1 | 1-2 | 1-3 |
|---|---|---|---|---|
| Epoxy coating containing 0.04 % dye | Yes | Yes | Yes | Yes |
| Primer + Hard coat | No | Yes | Yes | Yes |
| Antireflection coating 1 | No | No | Yes | No |
| Antireflection coating 2 | No | No | No | Yes |
| Photo-degradation (%) | 19 | 17 | 1 | 0 |

| Example | 2 | 2-1 | 2-2 | 2-3 |
|---|---|---|---|---|
| Epoxy coating containing 0.04 % dye | Yes | Yes | Yes | Yes |
| Primer + Hard coat | No | Yes | Yes | Yes |
| Antireflection coating 1 | No | No | Yes | No |
| Antireflection coating 2 | No | No | No | Yes |
| Photo-degradation (%) | 9 | 10 | 0 | 0 |

The primer mentioned in the above tables is a polyurethane-based impact-resistant primer with a thickness of 1 micron (Witcobond latex W-234®). The hard coat mentioned in the above tables is an abrasion-resistant coating with a thickness of 3 microns obtained by depositing and curing the composition of example 3 of the patent EP 0614957 (comprising γ-glycidoxypropyl trimethoxysilane, dimethyldiethoxysilane, colloidal silica and aluminium acetylacetonate; refractive index: 1.5). The antireflection coating 1 is the front face antireflective coating of example 1 of WO 2013/171435, with a 6.5 nm thick indium tin oxide layer interleaved between the 73 nm thick $ZrO_2$ layer and the 110 nm thick $SiO_2$ layer. The antireflection coating 2 is the antireflective coating of example 6 of the patent application WO 2008/107325. Said coating was deposited by evaporation under vacuum on the underlying abrasion resistant coating.

It can be seen that the primer and hard coat, deposited in this order on the dye-containing epoxy coating, hardly alter the resistance to photo-degradation of the dye present in the epoxy coating.

6. Incorporation of dye into a substrate: results

The levels of photo-degradation observed when the dyes were incorporated into a substrate are comparable with those obtained when the dyes were incorporated into an epoxy coating.

| Example | 13 | 14 |
|---|---|---|
| Dye | Solvent Yellow 157 | Disperse Yellow 114 |
| Photo-degradation (%) | 17 | 12 |
| Haze (%) | < 0.5 | < 0.5 |

Other dyes were also successfully incorporated into the substrate by a tinting process and provided low photo-degradation levels (Solvent yellow 114, Solvent Yellow 176, Disperse Yellow 211, Disperse Yellow 42, and Disperse Yellow 86).

## Claims

1. Optical article comprising at least one main surface onto which an epoxy coating is deposited, wherein the epoxy coating includes at least one absorbing dye comprising any one of the following groups of formulae:

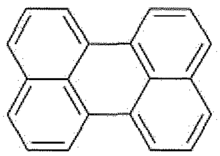
(I)

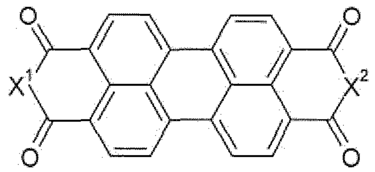
(Ia)

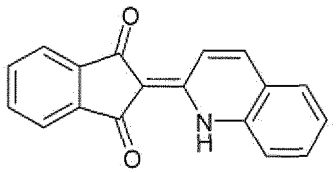
(II)

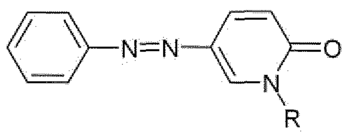
(III)

wherein R represents an aryl or alkyl group, $X^1$ and $X^2$ independently represent O or a N-$R^1$ group with $R^1$ representing an alkyl or aryl group, and the groups of formulae (I), (II) and (III) have at least one carbon atom substituted with a group chosen from -OH, -CN, bromo, -$NO_2$, alkoxy, aryloxy, -$CO_2$H, -CHO, -COalkyl, -COaryl, haloalkyl, -SH, -S-alkyl, -S-aryl, -$SO_2$alkyl, - $OSO_2$alkyl, -$SO_2$aryl and -$OSO_2$aryl, or have at least two carbon atoms substituted with a chloro group, and wherein the dye of formula (III) does not comprise any $SO_3$H group or a salt thereof, and the dye of formula (II) is not a compound having any one of the following formulae:

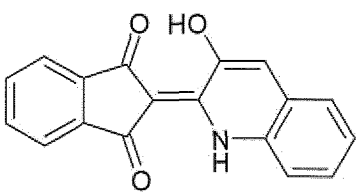
(IIa)

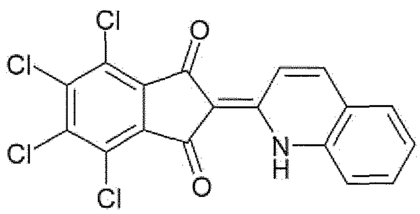
(IIb)

2. Optical article according to claim 1, wherein the absorbing dye at least partially inhibits transmission of light in at least one selected wavelength range included within the 100-380 nm wavelength range, the 380-780 nm wavelength range, and/or the 780-1400 nm wavelength range.

3. Optical article according to any one of the preceding claims, wherein the optical article has a substrate into which said at least one absorbing dye is incorporated.

4. Optical article according to any one of the preceding claims, wherein said coating is an antireflection coating, an abrasion- and/or scratch-resistant coating or a primer coating.

**5.** Optical article according to any one of the preceding claims, wherein said at least one absorbing dye is present in an amount ranging from 0.01 to 1.25 % relative to the weight of the coating.

**6.** Optical article according to any one of the preceding claims, wherein the groups of formulae (I), (Ia), (II) and (III) have at least one carbon atom substituted with a group chosen from -OH, -CN, bromo, $NO_2$, alkoxy and aryloxy.

**7.** Optical article according to any one of the preceding claims, wherein the groups of formulae (I), (II) and (III) have at least one carbon atom substituted with an electron donating group and at least one carbon atom substituted with an electron withdrawing group, and the group of formula (Ia) has at least one carbon atom substituted with an electron donating group.

**8.** Optical filtering epoxy coating for an optical article comprising at least one absorbing dye comprising any one of the following groups of formulae:

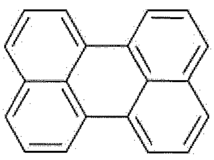 (I) 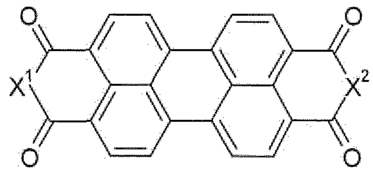 (Ia)

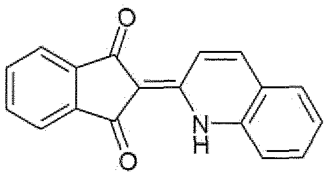 (II) 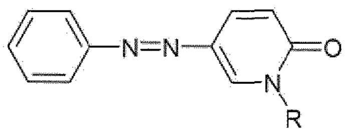 (III) 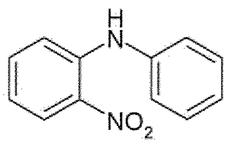 (IV)

wherein R represents an aryl or alkyl group, $X^1$ and $X^2$ independently represent O or a N-$R^1$ group with $R^1$ representing an alkyl or aryl group, and the groups of formulae (I), (II), (III) and (IV) have at least one carbon atom substituted with a group chosen from -OH, -CN, bromo, - $NO_2$, alkoxy, aryloxy, $-CO_2H$, -CHO, -COalkyl, -COaryl, haloalkyl, -SH, -S-alkyl, -S-aryl, - $SO_2$alkyl, -$OSO_2$alkyl, -$SO_2$aryl, -$OSO_2$aryl and sulfonamide, or have at least two carbon atoms substituted with a chloro group, and wherein the dye of formula (III) does not comprise any $SO_3H$ group or a salt thereof.

**9.** Optical filtering coating according to claim 8, wherein the coating is an antireflection coating, an abrasion- and/or scratch-resistant coating or a primer coating.

**10.** Optical filtering coating according to any one of claims 8 to 9, wherein said at least one absorbing dye is present in an amount ranging from 0.01 to 1.25 % relative to the weight of the coating.

**11.** Optical filtering coating according to any one of claims 8 to 10, wherein said at least one absorbing dye has any one of the following formulae:

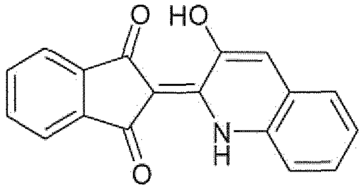 (IIa) 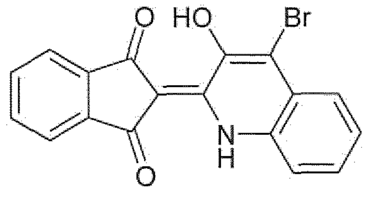 (IIc)

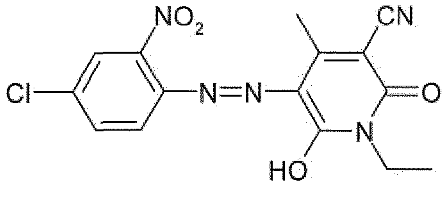 (IIIa)

**12.** Use of an absorbing dye comprising any one of the following groups of formulae:

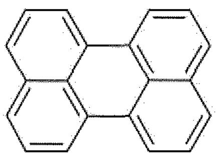 (I) 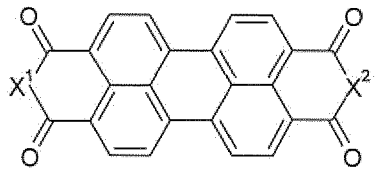 (Ia)

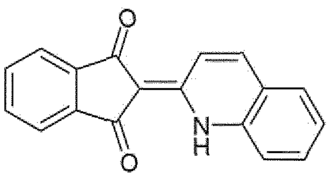 (II) 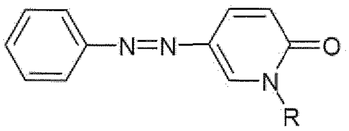 (III)

wherein R represents an aryl or alkyl group, $X^1$ and $X^2$ independently represent O or a N-$R^1$ group with $R^1$ representing an alkyl or aryl group, and the groups of formulae (I), (II) and (III) have at least one carbon atom substituted with a group chosen from -OH, -CN, bromo, -$NO_2$, alkoxy, aryloxy, -$CO_2H$, -CHO, -COalkyl, -COaryl, haloalkyl, -SH, -S-alkyl, -S-aryl, -$SO_2$alkyl, - $OSO_2$alkyl, -$SO_2$aryl and -$OSO_2$aryl, or have at least two carbon atoms substituted with a chloro group, and wherein the dye of formula (III) does not comprise any $SO_3H$ group or a salt thereof, and the dye of formula (II) is not a compound having any one of the following formulae:

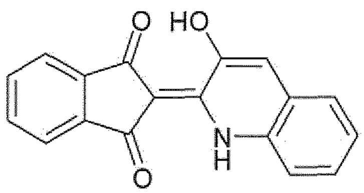 (IIa) 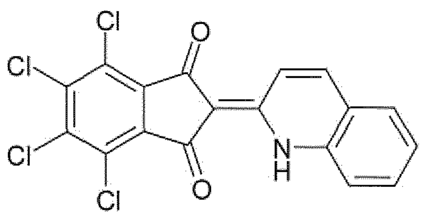 (IIb)

in an optical article for at least partially inhibiting transmission of light in at least one selected wavelength range, wherein said optical article comprises at least one main surface onto which an epoxy coating is deposited, the epoxy coating including said absorbing dye.

## Patentansprüche

**1.** Optischer Artikel, der mindestens eine Hauptoberfläche umfasst, auf der eine Epoxidbeschichtung abgeschieden ist, wobei die Epoxidbeschichtung mindestens einen Absorptionsfarbstoff enthält, der eine beliebige der folgenden Gruppen der folgenden Formeln umfasst:

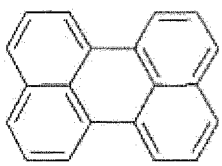 (I) 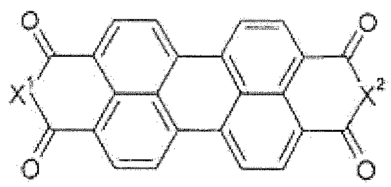 (Ia)

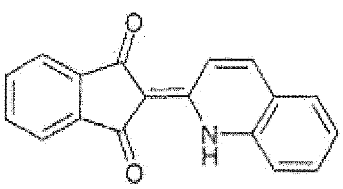 (II) 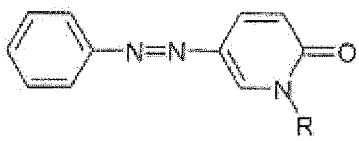 (III)

,

wobei R für eine Aryl- oder Alkylgruppe steht, $X^1$ und $X^2$ unabhängig für O oder eine N-$R^1$-Gruppe stehen, wobei

$R^1$ für eine Alkyl- oder Arylgruppe steht und die Gruppen der Formeln (I), (II) und (III) mindestens ein mit einer aus -OH, -CN, Brom, $-NO_2$, Alkoxy, Aryloxy, $-CO_2H$, -CHO, -CO-Alkyl, -CO-Aryl, Halogenalkyl, -SH, -S-Alkyl, -S-Aryl, -$SO_2$-Alkyl, $-OSO_2$-Alkyl, $-SO_2$-Aryl und $-OSO_2$-Aryl ausgewählten Gruppe substituiertes Kohlenstoffatom aufweisen oder mindestens zwei mit einer Chlorgruppe substituierte Kohlenstoffatome aufweisen und wobei der Farbstoff der Formel (III) keine $SO_3H$-Gruppe oder ein Salz davon umfasst und es sich bei dem Farbstoff der Formel (II) um keine Verbindung handelt, die eine beliebige der folgenden Formeln aufweist:

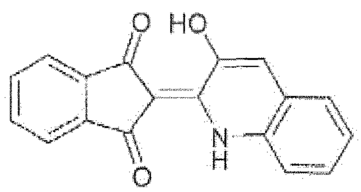 (IIa) 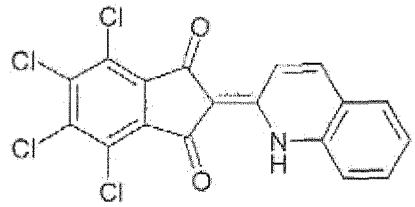 (IIb).

2. Optischer Artikel nach Anspruch 1, wobei der Absorptionsfarbstoff die Lichtdurchlässigkeit bei mindestens einem ausgewählten Wellenlängenbereich, der sich innerhalb des Wellenlängenbereichs von 100-380 nm, des Wellenlängenbereichs von 380-780 nm und/oder des Wellenlängenbereichs von 780-1400 nm befindet, zumindest teilweise hemmt.

3. Optischer Artikel nach einem der vorhergehenden Ansprüche, wobei der optische Artikel ein Substrat aufweist, in das der mindestens eine Absorptionsfarbstoff eingearbeitet ist.

4. Optischer Artikel nach einem der vorhergehenden Ansprüche, wobei es sich bei der Beschichtung um eine Antireflexionsbeschichtung, eine abrieb- und/oder kratzfeste Beschichtung oder eine Grundierungsbeschichtung handelt.

5. Optischer Artikel nach einem der vorhergehenden Ansprüche, wobei der mindestens eine Absorptionsfarbstoff in einer Menge im Bereich von 0,01 bis 1,25 %, bezogen auf das Gewicht der Beschichtung, vorliegt.

6. Optischer Artikel nach einem der vorhergehenden Ansprüche, wobei die Gruppen der Formeln (I), (Ia), (II) und (III) mindestens ein mit einer aus -OH, -CN, Brom, - $NO_2$, Alkoxy und Aryloxy ausgewählten Gruppe substituiertes Kohlenstoffatom aufweisen.

7. Optischer Artikel nach einem der vorhergehenden Ansprüche, wobei die Gruppen der Formeln (I), (II) und (III) mindestens ein mit einer Elektronen abgebenden Gruppe substituiertes Kohlenstoffatom und mindestens ein mit einer Elektronen ziehenden Gruppe substituiertes Kohlenstoffatom aufweisen und die Gruppe der Formel (Ia) mindestens ein mit einer Elektronen abgebenden Gruppe substituiertes Kohlenstoffatom aufweist.

8. Epoxidbeschichtung mit optischer Filterung für einen optischen Artikel, die mindestens einen Absorptionsfarbstoff umfasst, der eine beliebige der folgenden Gruppen von Formeln umfasst:

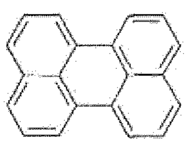 (I) 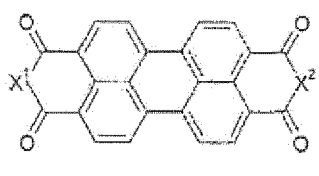 (Ia)

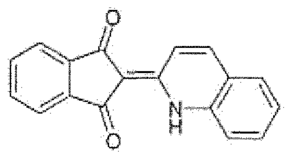 (II) 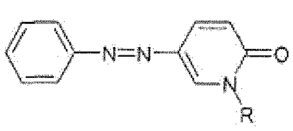 (III) 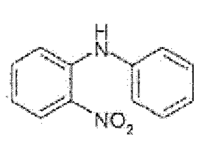 (IV),

wobei R für eine Aryl- oder Alkylgruppe steht, $X^1$ und $X^2$ unabhängig für O oder eine N-$R^1$-Gruppe stehen, wobei $R^1$ für eine Alkyl- oder Arylgruppe steht und die Gruppen der Formeln (I), (II), (III) und (IV) mindestens ein mit einer aus -OH, -CN, Brom, $-NO_2$, Alkoxy, Aryloxy, $-CO_2H$, -CHO, -CO-Alkyl, -CO-Aryl, Halogenalkyl, -SH, -S-Alkyl, -S-Aryl, $-SO_2$-Alkyl, $-OSO_2$-Alkyl, $-SO_2$-Aryl, $-OSO_2$-Aryl und Sulfonamid ausgewählten Gruppe substituiertes Kohlenstoffatom aufweisen oder mindestens zwei mit einer Chlorgruppe substituierte Kohlenstoffatome aufweisen und wobei der Farbstoff der Formel (III) keine $SO_3H$-Gruppe oder ein Salz davon umfasst.

**9.** Beschichtung mit optischer Filterung nach Anspruch 8, wobei es sich bei der Beschichtung um eine Antireflexionsbeschichtung, eine abrieb- und/oder kratzfeste Beschichtung oder eine Grundierungsbeschichtung handelt.

**10.** Beschichtung mit optischer Filterung nach einem der Ansprüche 8 bis 9, wobei der mindestens eine Absorptionsfarbstoff in einer Menge im Bereich von 0,01 bis 1,25 %, bezogen auf das Gewicht der Beschichtung, vorliegt.

**11.** Beschichtung mit optischer Filterung nach einem der Ansprüche 8 bis 10, wobei der mindestens eine Absorptionsfarbstoff eine beliebige der folgenden Formeln aufweist:

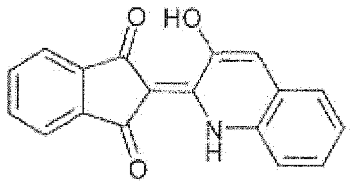 (IIa)

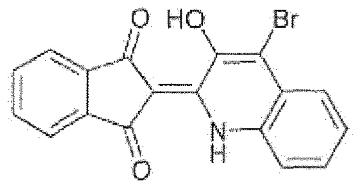 (IIc)

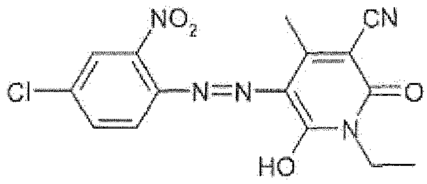 (IIIa)

**12.** Verwendung eines Absorptionsfarbstoffs, der eine beliebige der folgenden Gruppen von Formeln umfasst:

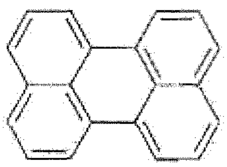 (I)

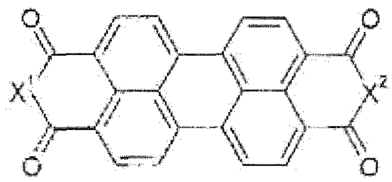 (Ia)

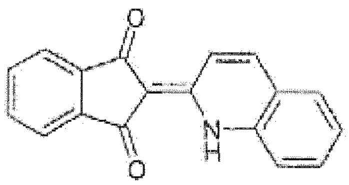 (II)

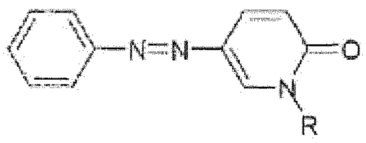 (III)

,

wobei R für eine Aryl- oder Alkylgruppe steht, $X^1$ und $X^2$ unabhängig für O oder eine N-$R^1$-Gruppe stehen, wobei $R^1$ für eine Alkyl- oder Arylgruppe steht und die Gruppen der Formeln (I), (II) und (III) mindestens ein mit einer aus -OH, -CN, Brom, -$NO_2$, Alkoxy, Aryloxy, -$CO_2H$, -CHO, -CO-Alkyl, -CO-Aryl, Halogenalkyl, -SH, -S-Alkyl, -S-Aryl, -$SO_2$-Alkyl, -$OSO_2$-Alkyl, -$SO_2$-Aryl und -$OSO_2$-Aryl ausgewählten Gruppe substituiertes Kohlenstoffatom aufweisen oder mindestens zwei mit einer Chlorgruppe substituierte Kohlenstoffatome aufweisen und wobei der Farbstoff der Formel (III) keine $SO_3H$-Gruppe oder ein Salz davon umfasst und es sich bei dem Farbstoff der Formel (II) um keine Verbindung handelt, die eine der folgenden Formeln aufweist:

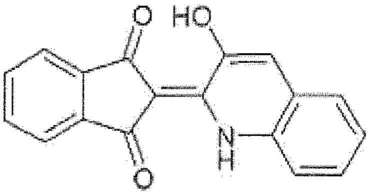
(IIa)
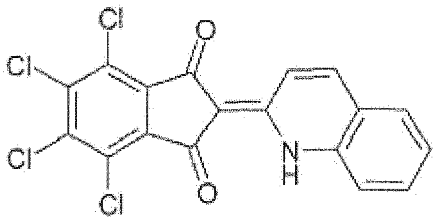
(IIb)

in einem optischen Artikel zur zumindest teilweisen Hemmung der Lichtdurchlässigkeit bei mindestens einem ausgewählten Wellenlängenbereich, wobei der optische Artikel mindestens eine Hauptoberfläche umfasst, auf der eine Epoxidbeschichtung abgeschieden ist, wobei die Epoxidbeschichtung den Absorptionsfarbstoff enthält.

## Revendications

1. Article optique comprenant au moins une surface principale sur laquelle un revêtement époxy est déposé, dans lequel le revêtement époxy comprend au moins un colorant absorbant comprenant l'un quelconque des groupes suivants de formules :

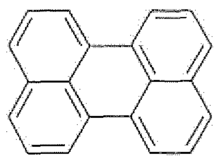
(I)
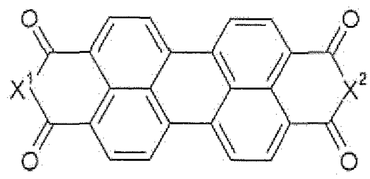
(Ia)

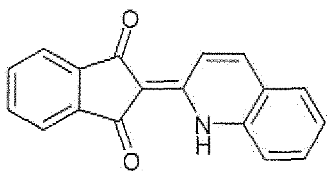
(II)
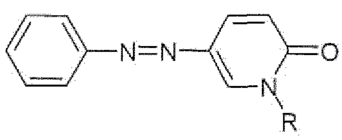
(III)

dans lesquelles R représente un groupe aryle ou alkyle, $X^1$ et $X^2$ représentent indépendamment O ou un groupe N-$R^1$ avec $R^1$ représentant un groupe alkyle ou aryle, et les groupes de formules (I), (II) et (III) ont au moins un atome de carbone substitué par un groupe choisi parmi -OH, -CN, bromo, -$NO_2$, alcoxy, aryloxy, -$CO_2H$, -CHO, -COalkyle, -COaryle, halogénoalkyle, -SH, -S-alkyle, -S-aryle, -$SO_2$-alkyle, -$OSO_2$alkyle, -$SO_2$aryle et -$OSO_2$aryle, ou ont au moins deux atomes de carbone substitués par un groupe chloro, et dans lequel le colorant de formule (III) ne comprend aucun groupe $SO_3H$ ou un sel de celui-ci, et le colorant de formule (II) n'est pas un composé ayant l'une quelconque des formules suivantes :

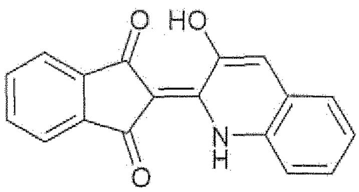
(IIa)
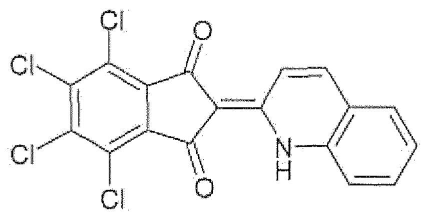
(IIb)

2. Article optique selon la revendication 1, dans lequel le colorant absorbant inhibe au moins partiellement la transmission de lumière dans au moins une plage de longueur d'onde sélectionnée incluse dans la plage de longueur d'onde de 100 à 380 nm, la plage de longueur d'onde de 380 à 780 nm, et/ou la plage de longueur d'onde de 780 à 1400 nm.

3. Article optique selon l'une quelconque des revendications précédentes, où l'article optique comporte un substrat dans lequel ledit au moins un colorant absorbant est incorporé.

4. Article optique selon l'une quelconque des revendications précédentes, dans lequel le revêtement est un revêtement antireflet, un revêtement résistant à l'abrasion et/ou aux rayures ou un revêtement primaire.

5. Article optique selon l'une quelconque des revendications précédentes, dans lequel ledit au moins un colorant absorbant est présent en une quantité dans la plage de 0,01 à 1,25 % par rapport au poids du revêtement.

6. Article optique selon l'une quelconque des revendications précédentes, dans lequel les groupes de formules (I), (Ia), (II) et (III) ont au moins un atome de carbone substitué par un groupe choisi parmi -OH, -CN, bromo, $NO_2$, alcoxy et aryloxy.

7. Article optique selon l'une quelconque des revendications précédentes, dans lequel les groupes de formules (I), (II) et (III) ont au moins un atome de carbone substitué par un groupe donneur d'électron et au moins un atome de carbone substitué par un groupe attracteur d'électron, et le groupe de formule (Ia) a au moins un atome de carbone substitué par un groupe donneur d'électron.

8. Revêtement époxy de filtrage optique pour un article optique comprenant au moins un colorant absorbant comprenant l'un quelconque des groupes des formules suivantes :

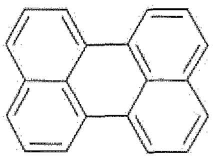 (I) 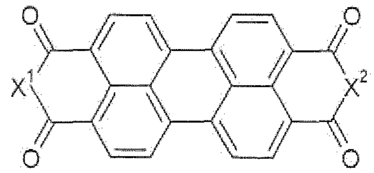 (Ia)

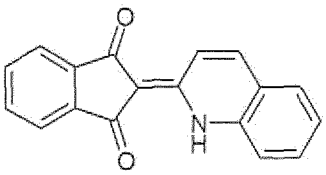 (II) 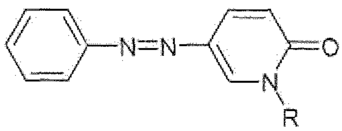 (III) 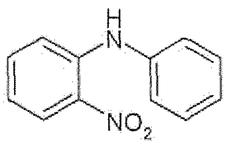 (IV)

dans lesquelles R représente un groupe aryle ou alkyle, $X^1$ et $X^2$ représentent indépendamment O ou un groupe N-$R^1$ avec $R^1$ représentant un groupe alkyle ou aryle, et les groupes de formules (I), (II), (III) et (IV) ont au moins un atome de carbone substitué par un groupe choisi parmi -OH, -CN, bromo, -$NO_2$, alcoxy, aryloxy, -$CO_2H$, -CHO, -COalkyle, -COaryle, halogénoalkyle, -SH, -S-alkyle, -S-aryle, -$SO_2$alkyle, -$OSO_2$alkyle, -$SO_2$aryle, -$OSO_2$aryle et sulfonamide, ou ont au moins deux atomes de carbone substitués par un groupe chloro, et dans lequel le colorant de formule (III) ne comprend aucun groupe $SO_3H$ ou un sel de celui-ci.

9. Revêtement de filtrage optique selon la revendication 8, le revêtement étant un revêtement antireflet, un revêtement résistant à l'abrasion et/ou aux rayures ou un revêtement primaire.

10. Revêtement de filtrage optique selon l'une quelconque des revendications 8 à 9, dans lequel ledit au moins un colorant absorbant est présent en une quantité dans la plage de 0,01 à 1,25 % par rapport au poids du revêtement.

11. Revêtement de filtrage optique selon l'une quelconque des revendications 8 à 10, dans lequel ledit au moins un colorant absorbant a l'une quelconque des formules suivantes :

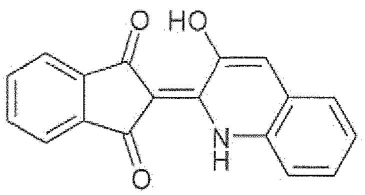 (IIa) 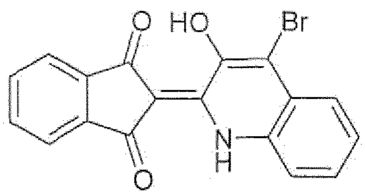 (IIc)

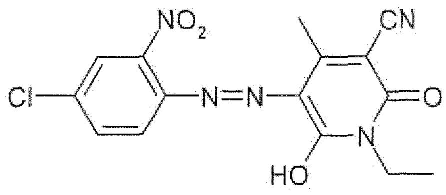 (IIIa)

**12.** Utilisation d'un colorant absorbant comprenant l'un quelconque des groupes des formules suivantes :

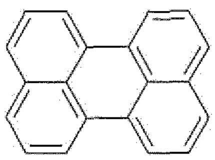 (I)

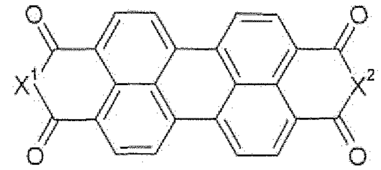 (Ia)

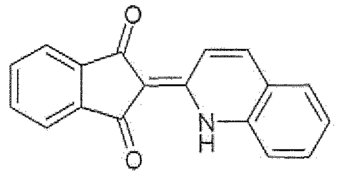 (II)

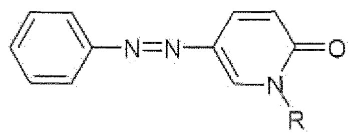 (III)

dans lesquelles R représente un groupe aryle ou alkyle, $X^1$ et $X^2$ représentent indépendamment O ou un groupe N-$R^1$ avec $R^1$ représentant un groupe alkyle ou aryle, et les groupes de formules (I), (II) et (III) ont au moins un atome de carbone substitué par un groupe choisi parmi -OH, -CN, bromo, -$NO_2$, alcoxy, aryloxy, -$CO_2H$, -CHO, -COalkyle, -COaryle, halogénoalkyle, -SH, -S-alkyle, -S-aryle, -$SO_2$alkyle, -$OSO_2$alkyle, -$SO_2$aryle et -$OSO_2$aryle, ou ont au moins deux atomes de carbone substitués par un groupe chloro, et dans laquelle le colorant de formule (III) ne comprend aucun groupe $SO_3H$ ou un sel de celui-ci, et le colorant de formule (II) n'est pas un composé ayant l'une quelconque des formules suivantes :

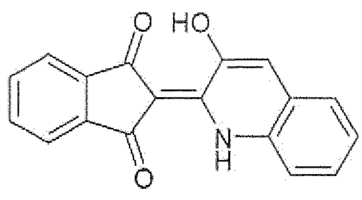 (IIa)

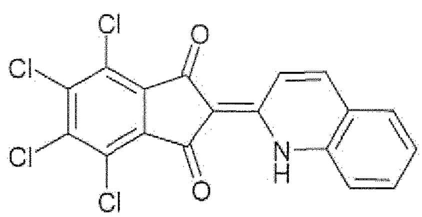 (IIb)

dans un article optique pour inhiber au moins partiellement la transmission de lumière dans au moins une plage de longueur d'onde sélectionnée, dans laquelle ledit article optique comprend au moins une surface principale sur laquelle un revêtement époxy est déposé, le revêtement époxy comprenant ledit colorant absorbant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008024414 A
- WO 2008014925 A
- US 2003182737 A
- US 6135595 A
- PL 134815
- US 2016168402 A
- EP 0749120 A
- EP 1494891 A
- JP 2004036032 A
- WO 2010111499 A
- WO 2008146087 A
- WO 2013013929 A
- JP 2000314088 A
- JP 2000241601 A
- US 6534443 B
- US 6554873 B
- US 20030020869 A
- US 2008127432 A
- US 2013244045 A
- US 2009047424 A
- US 20130230649 A
- US 20110058142 A
- WO 2007088312 A
- US 20030165698 A
- US 4211823 A
- EP 0614957 A
- WO 2013098531 A
- WO 2012076174 A
- WO 2012076714 A
- WO 2010109154 A
- WO 2011080472 A
- WO 2012153072 A
- WO 2012173596 A
- WO 2013171435 A
- WO 2008107325 A


### Non-patent literature cited in the description


- **KITCHEL E.** The effects of blue light on ocular health. *Journal of Visual Impairment and Blindness,* 2000, vol. 94 (6
- **GLAZER-HOCKSTEIN.** *Retina,* 2006, vol. 26 (1), 1-4
- **J. C. V. P. MOURA ; A. M. F. OLIVEIRA-CAMPOS ; J. GRIFFITHS.** *Dyes and Pigments,* 1997, vol. 33 (3), 173-196
- **Y. YANG ; G. QIAN ; D. SU ; M. WANG.** *Optics Communications,* 2004, vol. 239 (4-6), 415-420